(19) Europäisches Patentamt
European Patent Office
Office européen des brevets

(11) **EP 4 145 771 A1**

(12) **EUROPEAN PATENT APPLICATION**
published in accordance with Art. 153(4) EPC

(43) Date of publication:
**08.03.2023 Bulletin 2023/10**

(21) Application number: **20939289.3**

(22) Date of filing: **01.06.2020**

(51) International Patent Classification (IPC):
**H04L 12/24** (2006.01)   **H04L 12/721** (2013.01)
**H04L 12/42** (2006.01)

(52) Cooperative Patent Classification (CPC):
**H04L 12/42; H04L 41/00; H04L 45/06**

(86) International application number:
**PCT/CN2020/093785**

(87) International publication number:
**WO 2021/243524 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
 • **TANG, Wen**
 **Beijing 100102 (CN)**
 • **SONG, Jie**
 **Suzhou, Jiangsu 215000 (CN)**

 • **ZHANG, Junjie**
 **Suzhou, Jiangsu 215100 (CN)**
 • **MA, Gongsu**
 **Beijing 100000 (CN)**
 • **CHEN, Canlin**
 **Suzhou, Jiangsu 215100 (CN)**
 • **LIN, Tao**
 **Suzhou, Jiangsu 215200 (CN)**
 • **ZHOU, Jianxin**
 **Suzhou, Jiangsu 215008 (CN)**
 • **YANG, Rongju**
 **Beijing 102218 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **NETWORK TOPOLOGY CONSTRUCTION METHOD AND APPARATUS, AND COMPUTER READABLE MEDIUM**

(57)    The present invention provides a network topology construction method and apparatus, and a computer readable medium. The network topology construction method comprises: obtaining a MAC address table of each port on each switch in a target network; determining a first connection relationship according to a MAC address of a terminal device comprised in each obtained MAC address table, wherein the first connection relationship is used for characterizing a connection relationship between the terminal device and the switch comprised in a network; determining at least one first port according to the first connection relationship, wherein the first port is the port on each switch in the target network which is not connected to the terminal device; determining a second connection relationship according to the MAC address comprised in the MAC address table of each first port, wherein the second connection relationship is used for characterizing a connection relationship between switches in a network; and determining a network topology of the target network according to the first connection relationship and the second connection relationship. This solution can improve the accuracy of the constructed network topology.

Fig. 1

**Description**

**Technical Field**

The present invention relates to the technical field of communications, in particular to a network topology construction method and apparatus, and to a computer-readable medium.

**Background Art**

A network topology refers to the physical layout of various devices interconnected using transmission media. Specifically, the network topology may be a specific physical arrangement of devices or a logical arrangement of devices. A network topology is the basis of network management, and most functions in network management can be realized based on a network topology. With the aid of a network topology, a network administrator can intuitively learn the states of all network devices. Thus the network administrator can be freed from repeated mechanical manual monitoring and locate a fault in the network quickly so that the network is visible, controllable and manageable.

Currently, when a network topology is constructed, physical connection relationships between devices in a network, for example, the connection relationship between terminal devices and switches and the connection relationship between switches, need to be manually identified. Then the network topology is constructed according to the identified physical connection relationships between various devices.

In the prior network topology construction method, physical connection relationships between devices in a network are determined through manual identifications, and then a network topology is constructed according to the identified physical connection relationships between various devices. However, since a network possibly comprises a large number of devices and the physical connection relationships between devices in a large network are very complicated, the determination of physical connection relationships between various devices in a network through manual identifications is error prone. As a result, the constructed network topology has a low accuracy.

**Summary of the Invention**

In view of this, the network topology construction method and apparatus, and a computer-readable medium provided by the present invention can improve the accuracy of the constructed network topology.

In a first aspect, embodiments of the present invention provide a network topology construction method, and the method comprises:

> acquiring a media access control (MAC) address table of each port on each switch in a target network, wherein the target network comprises at least two switches and at least one terminal device;
> determining a first connection relationship in the target network according to the MAC addresses of terminal devices in the target network in each acquired MAC address table, wherein the first connection relationship is used to represent a connection relationship between terminal devices and switches included in a network;
> determining at least one first port according to the first connection relationship in the target network, wherein the first port is a port on each switch in the target network that is not connected with a terminal device;
> determining a second connection relationship in the target network according to the MAC addresses included in the MAC address table of each of the first ports in the target network, wherein the second connection relationship is used to represent a connection relationship between switches in a network;
> determining a network topology of the target network according to the first connection relationship and the second connection relationship in the target network.

In a second aspect, embodiments of the present invention provide a network topology construction apparatus, and the apparatus comprises:

> a table acquisition module, used to acquire a MAC address table of each port on each switch in a target network, wherein the target network comprises at least two switches and at least one terminal device;
> a first relationship determination module, used to determine a first connection relationship in the target network according to the MAC addresses of terminal devices in the target network that are included in each MAC address table acquired by the
> table acquisition module, wherein the first connection relationship is used to represent a connection relationship between terminal devices and switches in a network;
> a port screening module, used to determine at least one first port according to the first connection relationship determined by the first relationship determination module in the target network, wherein the first port is a port connected without a terminal device on each switch in the target network;

a second relationship determination module, used to determine a second connection relationship in the target network according to the MAC addresses included in the MAC address table of each of the first ports determined by the port screening module in the target network, wherein the second connection relationship is used to represent a connection relationship between switches in a network;

a topology construction module, used to determine a network topology of the target network according to the first connection relationship determined by the first relationship determination module and the second connection relationship determined by the second relationship determination module in the target network.

In a third aspect, embodiments of the present invention further provide another network topology construction apparatus, which comprises at least one memory and at least one processor;

the at least one memory is used to store a machine-readable program;

the at least one processor is used to invoke the machine-readable program to execute the method provided in the first aspect.

In a fourth aspect, embodiments of the present invention provide a computer-readable medium, computer instructions are stored in the computer-readable medium, and a processor executes the method provided in the first aspect when the computer instructions are executed by the processor.

From the technical solutions provided in the first to the fourth aspect, it can be learned that a target network comprises at least two switches and at least one terminal device, after the MAC address table of each port on each switch in the target network is acquired, a first connection relationship representing a connection relationship between terminal devices and switches in the target network can be determined according to the MAC addresses of terminal devices in each of the acquired MAC address table, first ports on each switch that are not connected with a terminal device can be determined according to the first connection relationship, a second connection relationship representing a connection relationship between switches in the target network can be determined according to the MAC addresses included in the MAC address table of each of the first ports, and then the network topology of the target network can be determined according to the first connection relationship and the second connection relationship. Since the MAC addresses of terminal devices directly or indirectly connected with switch ports are recorded in the MAC address tables of switch ports, the first connection relationship between switches and terminal devices and the second connection relationship between switches in the target network can be derived according to the MAC address tables of ports on each switch in the target network, and then the network topology of the target network can be determined according to the first connection relationship and the second connection relationship. Thus, only the MAC address tables of ports on each switch in the target network need to be acquired and the network topology of the target network can be constructed according to the acquired MAC address tables. In this way, the degree of manual participation in the network topology construction is reduced, an incorrectly constructed network topology caused by an incorrect manual identification of physical connection relationships between devices in a network is avoided, and then the accuracy of the constructed network topology is improved.

In a first possible implementation mode, in combination with any of the above-mentioned aspects, when the first connection relationship is determined according to the MAC addresses of terminal devices that are included in each of the acquired MAC address tables, the connection relationship between terminal devices and switches may be determined according to the number of MAC addresses of terminal devices in the MAC address table. Specifically, the first connection relationship may be determined in the following way:

for each acquired MAC address table,

if the MAC address table contains only one MAC address of a first terminal device in the target network and no other acquired MAC address tables containing MAC addresses completely the same as the MAC addresses included in the MAC address table exist, determine that the port which the MAC address table belongs to is connected with the first terminal device;

if the MAC address table contains at least two MAC addresses of a second terminal device in the target network, determine that the port which the MAC address table belongs to is connected with the second terminal device;

determine a first connection relationship in the target network according to the connection relationship between terminal devices and ports of the switches in the target network and the ports included in each switch in the target network.

In embodiments of the present invention, if a MAC address table contains only one MAC address of a first terminal device and no other MAC address tables containing MAC addresses completely the same as the MAC addresses in the MAC address table exist, it may be uniquely determined that the switch port which the MAC address table belongs to is connected with the first terminal device. If a MAC address table contains at least two MAC addresses of a second terminal device, it may also be determined that the switch port which the MAC address table belongs to is connected with the second terminal device. For a programmable logic controller (PLC), communication module or host computer supporting PROFIENT, a port usually corresponds to a plurality of MAC addresses, wherein one MAC address is bound to an IP address (the MAC address will appear in the MAC address tables of other switches) and other MAC addresses are used for LLDP/PN-PTCP/MRP communication. Therefore, when the MAC address table of a switch port contains a plurality of MAC addresses corresponding to a terminal device, the connection relationship between the terminal device and the switch port may be determined.

In a second possible implementation mode, in combination with any above-mentioned aspect, when the second connection relationship is determined according to the MAC addresses included in the MAC address table of each of the first ports, the second connection relationship may be determined according to whether a port on a switch has a MAC address in different ways. Specifically, the second connection relationship may be determined in the following way:

determine whether each port on each switch in the target network has a MAC address;
if each port on each switch in the target network has a MAC address, determine the second connection relationship in the target network according to the MAC addresses of the ports of the switches included in the MAC address table of each of the first ports in the target network;
if at least one port on each switch in the target network has no MAC address, determine the second connection relationship in the target network according to the MAC addresses of terminal devices in the MAC address table of each of the first ports in the target network.

In embodiments of the present invention, the following two cases may exist for a switch: In one case, each port on the switch itself does not have a MAC address (if a management port is provided for the switch, the management port has a MAC address), and in the other case, a MAC address is assigned to each port on the switch. When a switch in a target network is a switch in the first case, the second connection relationship may be determined according to the MAC addresses of terminal devices in the MAC address table of each first port, and when a switch in a target network is a switch in the second case, the second connection relationship may be determined according to the MAC addresses of the ports on switches in the MAC address table of each first port, and of course, the second connection relationship may also be determined according to the MAC addresses of terminal devices in the MAC address table of each first port. If each port on each switch has a MAC address, the MAC addresses of the ports on switches in the MAC address table of the first port may more directly reflect the connection relationship between switches. Thus, the second connection relationship may be determined quickly, and the network topology construction speed may be guaranteed. If not all ports on each switch have a MAC address, the connection relationship between switches may be derived according to the MAC addresses of terminal devices in the MAC address table of the first port. This is a universal way, so, even if each port on each switch has a MAC address, the second connection relationship may also be determined in this way.

In a third possible implementation mode, in combination with the above-mentioned second possible implementation mode, when the second connection relationship is determined according to the MAC addresses of the ports on switches in the MAC address table of each first port, the MAC addresses of ports of a redundancy manager in a target network may be first deleted from the MAC address table of each first port to eliminate interference of the redundancy manager, and then the second connection relationship may be determined according to the MAC addresses of the ports on switches in the MAC address table of each first port. Specifically, the second connection relationship may be determined in the following way:

for any switch in the target network, if the MAC addresses of at least two ports on the switch are in the MAC address table of the same port on another switch in the target network, determine that the switch is a redundancy manager in the target network and delete the MAC addresses of all ports on the switch from the MAC address table of each first port;
for each of the first ports in the target network, if the MAC address table of the first port contains a MAC address of a second port in the target network, determine that the first port is connected with the second port, wherein the first port and the second port are located on different switches in the target network;
determine the second connection relationship in the target network according to the connection relationship between each of the first ports and the second port in the target network and the switches the first port and the second port belong to.

In embodiments of the present invention, the MAC addresses of at least two ports on a switch serving as a redundancy manager will appear in the MAC address table of the same port on another switch. The switch serving as a redundancy manager may be screened out of the switches according to this feature. After the MAC addresses of each port on the redundancy manager are deleted from the MAC address table of each first port, the MAC addresses of interconnected ports of two switches will appear in each of the respective MAC address tables. Based on this feature, the second connection relationship may be determined according to the MAC addresses of the ports of switches in the MAC address table of each first port. Since the MAC addresses of the ports of switches in each MAC address table may more intuitively reflect the connection relationship between switches, the connection relationship between switches in a target network may be quickly determined according to the MAC addresses of the ports of switches and the network topology construction efficiency may be improved.

In a fourth possible implementation mode, in combination with the above-mentioned second possible implementation mode, when the second connection relationship is determined according to the MAC addresses of terminal devices in the MAC address table of each first port, the second connection relationship may be determined according to the number of MAC addresses of terminal devices in the MAC address table of each first port and the number of MAC addresses of the same terminal device in the MAC address tables of different first ports. Specifically, the second connection relationship may be determined in the following way:

for each of the first ports in the target network, perform the following:

screen a third port out of first ports other than the first port in the target network, wherein the MAC address table of the third port and the MAC address table of the first port contain at least one identical MAC address;
acquire a corresponding first MAC address set of the first port, wherein the elements in the first MAC address set are MAC addresses of terminal devices in the MAC address table of the first port;
for each of the third ports, acquire a corresponding second MAC address set of the third port, wherein the elements in the second MAC address set are MAC addresses of terminal devices in the MAC address table of the third port;
determine the connection relationship between the first port and the third port according to the inclusion relationship between the first MAC address set and each of the second MAC address sets and the inclusion relationship between the subsets of the first MAC address set and each of the second MAC address sets;
determine the second connection relationship in the target network according to the connection relationship between each of the first ports and the third port in the target network and the switches the first port and the third port belong to.

In embodiments of the present invention, the MAC addresses of terminal devices connected with a lower-layer switch will appear in the MAC address table of a port on an upper-layer switch. Therefore, a set consisting of MAC addresses in the MAC address table of a port on a lower-layer switch is a subset consisting of MAC addresses in a MAC address table of a port on an upper-layer switch. Based on this feature, the second connection relationship may be derived according to the MAC addresses of terminal devices in the MAC address table of each first port. Since different types of switches can acquire a MAC address table containing MAC addresses of terminal devices, the method of determining the second connection relationship is applicable to different types of networks and has high applicability.

In a fifth possible implementation mode, in combination with any above-mentioned aspect, the first possible implementation mode, the second possible implementation mode, the third possible implementation mode or the fourth possible implementation mode, in the case of a MAC address table of each port on each switch in a target network, the MAC address table of each port on each switch in the target network may be acquired from a switch located at the convergence layer and/or core layer of the target network, wherein a switch located at the core layer of the target network is connected with a switch located at the convergence layer of the target network, a switch located at the convergence layer of the target network is connected with a switch located at the access layer of the target network, and a switch located at the access layer of the target network is connected with terminal devices.

In embodiments of the present invention, switches in a network may be classified into access layer switches, convergence layer switches and core layer switches. Access layer switches are used to connect terminal devices, convergence layer switches are used to connect access layer switches or terminal devices, and core layer switches are used to connect convergence layer switches or terminal devices. Usually, the number of access layer switches is greater than the number of convergence layer switches, and the number of convergence layer switches is greater than the number of core layer switches. Probes are deployed on convergence layer switches and/or core layer switches, and then the deployed probes are utilized to acquire the MAC address table of a port on a switch from convergence layer switches and/or core layer switches. On the one hand, the number of probes to be deployed to acquire MAC address tables can be reduced, and then the network topology construction efficiency can be improved and the network topology construction cost can be lowered. On the other hand, MAC address tables acquired from convergence layer switches and/or core layer switches can reflect the connection relationship between switches, and thus a complete network topology can be constructed, and the network topology construction solution can be applied to different types of networks.

**Brief Description of the Drawings**

Fig. 1 is a flowchart of a network topology construction method provided by one embodiment of the present invention.

Fig. 2 shows a network topology provided by embodiment 3 of the present invention.

Fig. 3 shows an initialized network topology provided by embodiment 3 of the present invention.

Fig. 4 shows a network topology provided by embodiment 3 of the present invention after the connection relationship between switches and terminal devices is determined.

Fig. 5 shows a network topology provided by embodiment 3 of the present invention after the connection relationship between some switches is determined.

Fig. 6 shows another network topology provided by embodiment 3 of the present invention after the connection relationship between some switches is determined.

Fig. 7 shows a network topology provided by embodiment 4 of the present invention.

Fig. 8 shows an initialized network topology provided by embodiment 4 of the present invention.

Fig. 9 shows a network topology provided by embodiment 4 of the present invention after the connection relationship between some switches and terminal devices is determined.

Fig. 10 shows an equivalent network topology provided by embodiment 4 of the present invention.

Fig. 11 shows a network topology provided by embodiment 5 of the present invention.

Fig. 12 shows an initialized network topology provided by embodiment 5 of the present invention.

Fig. 13 shows a network topology provided by embodiment 5 of the present invention after the connection relationship between switches and terminal devices is determined.

Fig. 14 is a schematic diagram of a network topology construction apparatus provided by one embodiment of the present invention.

Fig. 15 is a schematic diagram of a further network topology construction apparatus provided by one embodiment of the present invention.

Fig. 16 is a schematic diagram of a network topology construction apparatus comprising a determination unit, provided by one embodiment of the present invention.

Fig. 17 is a schematic diagram of a further network topology construction apparatus comprising a determination unit, provided by one embodiment of the present invention.

Fig. 18 is a schematic diagram of yet a further network topology construction apparatus comprising a determination unit, provided by one embodiment of the present invention.

Fig. 19 is a schematic diagram of yet a further network topology construction apparatus provided by one embodiment of the present invention.

Description of reference numerals in the drawings:

101: Acquire a MAC address table of each port on each switch in a target network

102: Determine a first connection relationship according to the MAC addresses of terminal devices included in each MAC address table

103: Determine at least one first port according to the first connection relationship in the target network

104: Determine a second connection relationship according to the MAC addresses included in the MAC address table of each of the first ports

105: Determine a network topology of the target network according to the first connection relationship and the second connection relationship in the target network

| 21: Table acquisition module | 22: First relationship determination module | 23: Port screening module |
|---|---|---|
| 24: Second relationship determinationmodule | 25: Topology construction module | 221: First matching unit |
| 222: Second matching unit | 223: Integration unit | 241: Determination unit |
| 242: First relationship determination unit | 243: Second relationship determination unit | 2431: Address deletion subunit |
| 2432: First relationship determinationsubunit | 2433: First integration subunit | 2434: Port screening subunit |
| 2435: First set construction subunit | 2436: Second set construction subunit | 2438: Second integration subunit |
| 2437: Second relationshipdeterminationsubunit | 26: Memory | 27: Processor |

## Detailed Description of the Invention

As mentioned above, currently, when a network topology is constructed, connection relationships between devices in a network, for example, the connection relationship between switches and the connection relationship between switches and terminal devices, need to be manually identified. Then the network topology is constructed according to the identified connection relationships between various devices. When a network comprises a large number of switches and terminal devices, the connection relationship between switches and terminal devices in the network is very complicated. When the connection relationship between devices in the network is incorrectly identified, the constructed network topology will inevitably be incorrect. Therefore, the accuracy of a network topology constructed by the use of the prior method of constructing a network topology through manual identifications of connection relationships between devices in a network is low.

In embodiments of the present invention, the MAC address table of a port on a switch contains MAC addresses of terminal devices and the MAC addresses included in the MAC address table can reflect not only the connection relationship between switches and terminal devices, but also the connection relationship between switches. Therefore, the MAC address table of a port on each switch can be acquired from a target network, then the connection relationship between switches and terminal devices and the connection relationship between switches in the target network according to the MAC addresses in each acquired MAC address table can be determined, and then a network topology of the target network according to the connection relationship between switches and terminal devices and the connection relationship between switches can be constructed. Since no manual identification of connection relationships between devices in a network is required during network topology construction, a manual identification error is avoided. Thus, the accuracy of a constructed network topology is improved.

The network topology construction method and apparatus provided by embodiments of the present invention will be described in detail below in combination with the drawings.

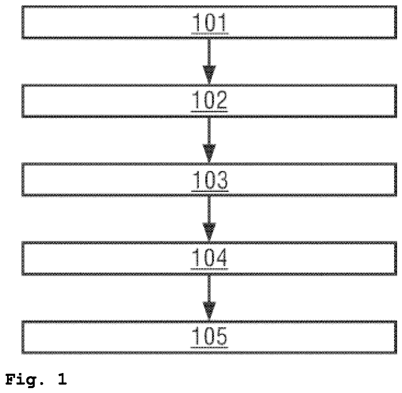

As shown in Fig. 1, embodiments of the present invention provide a network topology construction method and the method comprises the following steps:

Step 101: acquiring a MAC address table of each port on each switch in a target network, wherein the target network comprises at least two switches and at least one terminal device;

Step 102: determining a first connection relationship in the target network according to the MAC addresses of terminal devices in the target network that are included in each acquired MAC address table, wherein the first connection relationship is used to represent a connection relationship between terminal devices and switches in a network;

Step 103: determining at least one first port according to the first connection relationship in the target network, wherein the first port is a port connected with no terminal device on each switch in the target network;

Step 104: determining a second connection relationship in the target network according to the MAC addresses included in the MAC address table of each of the first ports in the target network, wherein the second connection relationship is used to represent a connection relationship between switches in a network;

Step 105: determining a network topology of the target network according to the first connection relationship and the second connection relationship in the target network.

In embodiments of the present invention, since the MAC addresses of terminal devices directly or indirectly connected with a switch are recorded in the MAC address table of a switch port, the first connection relationship between switches and terminal devices and the second connection relationship between switches in the target network can be derived according to the acquired MAC address tables after the MAC address table of each port on each switch is acquired from the target network, and then the network topology of the target network can be determined according to the first connection relationship and the second connection relationship. Thus, only the MAC address tables of ports on each switch in the target network need to be acquired and the network topology of the target network can be automatically constructed according to the acquired MAC address tables. In this way, the degree of manual participation in the network topology construction is reduced, an incorrectly constructed network topology caused by an incorrect manual identification of physical connection relationships between devices in a network is avoided, and then the accuracy of the constructed network topology is improved.

In embodiments of the present invention, a target network comprises switches and terminal devices, and the terminal devices may be devices having the network communication function, such as hosts, notebook computers, PLCs, communication modules and host computers. In addition, the target network may be an independent network or a part of a network, depending on the requirements for the network topology to be constructed. Therefore, an acquired MAC address table may possibly contain MAC addresses of switches or terminal devices in a network other than the target network. However, the MAC addresses of switches or terminal devices in a network other than the target network have no influence on the implementation of the solution. The MAC addresses of switches or terminal devices in a network other than the target network can be deleted from the acquired MAC address table, or the MAC addresses of switches or terminal devices in a network other than the target network can be used as a reference to construct and validate the network topology.

In embodiments of the present invention, when the MAC address table of each port on each switch in the target network is acquired, the MAC address table of each port on each switch can be acquired through the Simple Network Management Protocol (SNMP). Specifically, configuration information complying with the Management Information Base (MIB) framework can be acquired through the SNMP, and then the MAC address table of each port on each switch can be extracted from the acquired configuration information.

Alternatively, on the basis of the network topology construction method shown in Fig. 1, when the first connection relationship representing the connection relationship between terminal devices and switches in a target network is determined according to the MAC addresses of terminal devices included in each MAC address table, the connection relationship between terminal devices and switches in the target network can be determined based on the following three rules:

(1) When a port on a switch is directly connected with a terminal device (other than a switch), the corresponding MAC address set of a corresponding port in the MAC address table of the switch should contain only one MAC address.

(2) For devices supporting PROFIENT (for example, PLC, communication module or host computer), a port usually corresponds to a plurality of MAC addresses, one MAC address is bound to an IP address (the MAC address will appear in the MAC address tables of other switches) and other MAC addresses are used for LLDP/PN-PTCP/MRP communication. Through the SNMP, the MAC address bound to an IP address can be obtained by accessing ifPhysAddress.1, and the other MAC addresses can be obtained by accessing ifPhysAddress.2/3....

Therefore, the terminal device connected to a port on a switch can be determined according to whether the MAC address table of the port on the switch contains a plurality of MAC addresses corresponding to the same terminal device.

(3) It can be determined that a terminal device is not directly connected to a port on the first switch by determining whether the MAC address table of the port on the switch contains MAC addresses of the terminal device and MAC addresses of ports on other switches.

Alternatively, the second connection relationship representing the connection relationship between switches can be determined in two ways according to whether a port on each switch in the target network has a MAC address. When each port on each switch in the target network has a MAC address, the second connection relationship can be determined according to the MAC addresses of the ports on switches in each acquired MAC address table, and when the ports on some switches or all switches in the target network have no MAC addresses, the second connection relationship can be determined according to the MAC addresses of terminal devices in each acquired MAC address table.

Below, embodiment 1 is given to describe in detail the method of determining the second connection relationship according to the MAC addresses of terminal devices in each MAC address table, and embodiment 2 is given to describe in detail the method of determining the second connection relationship according to the MAC addresses of the ports on switches in each MAC address table.

Embodiment 1:

1. Initialization

Initialize list_of_mac_set=[] (list of MAC address set); Initialize switch_to_endpoint=[] (list of (direct) connections between terminal devices and switches);
Initialize switch_to_switch=[] (ports connected between switches);
Initialize the network topology which comprises all n switches $S_i$ and all terminal devices, with no connection between switches and terminal devices.

2. Preprocess input data and obtain a list_of_mac_set (list of MAC address tables of ports on each switch). Table 1 is a list_of_mac_set (list of MAC address tables).

Table 1

| Switch | Port | MAC address set |
|--------|------|-----------------|
|        |      |                 |

(continued)

| Switch | Port | MAC address set |
|--------|------|-----------------|
| $S_1$ | $P_1$ | $D_1, D_2, D_3, ...$ |
| | ... ... | |
| | $P_m$ | |
| ... | | |
| $S_n$ | $P_1$ | $D_i, D_j, D_k, ...$ |
| | ... ... | |
| | $P_m$ | |

3. For data in list_of_mac_set, identify connections between switches and terminal devices (other than connections between switches) and save the connections in switch_to_endpoint.

1) When a port on a switch is directly connected with an IT device (other than a switch), the corresponding MAC address set of a corresponding port in the MAC address table of the switch should contain only one MAC address.

2) For devices supporting PROFIENT (including PLC, communication module or host computer), a port usually corresponds to a plurality of MAC addresses, one MAC address is bound to an IP address (the MAC address will appear in the MAC address tables of other switches) and other MAC addresses are used for LLDP/PN-PTCP/MRP communication. Through the SNMP, the MAC address bound to an IP address can be obtained by accessing ifPhysAddress.1, and the other MAC addresses can be obtained by accessing ifPhysAddress.2/3....

Therefore, the terminal device connected to a port on a switch can be determined according to whether the MAC address table of the port on the switch contains a plurality of MAC addresses corresponding to the same device.

3) It can be determined that a terminal device is not directly connected to a port on the first switch by determining whether the MAC address table of the port on the switch contains the MAC address of the terminal device (for example, S623) and MAC addresses of ports on other switches;
connect the identified terminal device to the corresponding switch in the network topology and add $S_i=\{D_j, D_k, ...\}$ (set of terminal devices directly connected to the switch) to switch_to_endpoint.

If a terminal device appears in the MAC address table of a port on a plurality of switches and the MAC address table of the port contains only the MAC address (for example, $S_iP_j=\{D_k\}$) of the terminal device, the switch which the terminal device is connected to cannot be determined temporarily. In this case, let all such MAC address tables of switch ports form an (equivalent) set $\{S_iP_j=\{D_k\},...\}$ and add it to the end of switch_to_endpoint.

4. Extract MAC address sets of ports not connected to terminal devices on each switch from Table 1 and mark them with $S_iP_j$, wherein $S_i$ is a switch number and $P_j$ is a port number on a switch. Add $S_iP_j=\{D_k,D_l,...\}$ to switch_to_switch.

Two cases exist for a current switch. In one case, each port on the switch has no MAC address (if a management port is provided for the switch, the management port has a MAC address), and in the other case, a MAC address is assigned to each port on the switch. Through the SNMP, the MAC address of each port can be similarly obtained by accessing OIDifPhysAddress(1.3.6.1.2.1.2.2.1.6).1 of the switch. Therefore, the realization of the algorithm requires that those addresses should be filtered out when switch_to_switch is constructed.

5. Derive the connection relationship between switches based on the equivalent relationship.

1) Take (simultaneously delete) a first $S_x$ out of switch_to_endpoint.

2) If $S_x$ is a set of switches in the form of $S_x=\{...\}$, then:

2.1) search switch_to_switch for $S_x$ (set of included devices)

2.2) if the unique $S_yP_z$ (set of included devices) in switch_to_switch is the same as $S_x$, that is to say, $S_yP_z=S_x$, delete $S_yP_z=\{D_i,...\}$ from switch_to_switch and detect whether the connection between switches $S_x$ and $S_y$ in the current network topology has been determined,

if the connection relationship has not been determined, go to step 4);

if the connection relationship has been derived, go to step 6);

2.3) if more than two elements are matched in switch_to_switch, that is to say, a plurality of $S_yP_z$ satisfy $S_y^iP_{z=S_x}$, i=1,2,... (multiple equivalent relationships), then check the current network topology, and if the network connections between $S_x$ and a plurality of switches $S_y^i$ have been derived, directly delete the (multiple) equivalent relationship(s) and go to step 6);

otherwise, the connection relationship between the switch $S_x$ and a plurality of switches $S_y^i$ cannot be determined currently. Thus, delete each $S_y^iP_z$ from switch_to_switch, generate an equivalence class set $\{S_y^1P_{z=S_x},\ S_y^2P_{v=S_x},\ \cdots\}$, add it to the end of switch_to_endpoint, and go to step 6);

2.4) If no result is obtained after $S_x$ is matched in the complete set, it is necessary to further perform matching in the subset.

Search switch_to_switch for the subset $S'\subseteq S_x$ of $S_x$ in the decreasing sequence of the sizes of subsets.
If the unique $S_yP_z$ (set of included devices) in switch_to_switch is the same as S', that is to say, $S_yP_z$ = S', go to step 2.2) for similar processing.
If more than two elements are matched in switch_to_switch, go to step 2.3) for similar processing.
2.5) If switch_to_switch contains no element corresponding to $S_x$ (and the subset), put $S_x$ back to the end of switch_to_endpoint and go to step 6).

3) If $S_x$ is an equivalence class set in the form of $\{S_yP_z = \{D_i\}/S_i, S_uP_v = \{D_j\}/S_j,...\}$, then

3.1) Starting from the first equivalent relationship in the equivalence class set, attempt to check the current equivalent relationship one by one.
3.2) Check the current equivalent relationship, and if the relationship is satisfied in the current network topology, skip the relationship and go back to step 3.1) to select the next equivalent relationship.
3.3) For the current equivalent relationship $S_yP_z=\{D_i\}/S_i$, attempt to connect a target device or switch Di/Si to the port $P_z$ on the switch $S_y$.
3.4) Check whether the current assumption is reasonable according to list_of_mac_set, including:
whether the port $P_z$ on the switch $S_y$ has been occupied by other connections so that it cannot be used to connect $D_i/S_i$, and whether the switch $S_y$ also has (or already has had) a port connecting another switch $S_u$ so that such an equivalence class can be formed.
3.5) If the assumptions are unreasonable, go to step 3.1) to attempt to check the next assumption.
3.6) If the current assumption is reasonable, then save the field (including current network topology, switch_to_endpoint, switch_to_switch, current equivalence class set, and selections made currently) selected for the equivalence class.
Delete processed assumed relationships (including skipped and selected assumed relationships) from the equivalence class set. For the remaining equivalence class sets, if they are null, directly go to step 4); if only one relationship exists in an equivalence class set, add the relationship to switch_to_switch, and otherwise, put the modified equivalence class set back at the end of switch_to_endpoint. Then go to step 4).
3.7) If none of equivalent relationships in the equivalence class set hold, put equivalent relationships back at the end of switch_to_endpoint, and continue derivations after more information is obtained from further derivations. Go to step 6) .
4) Connect the switch $S_x$ to the port $P_z$ on the switch $S_y$ in the network topology. Determine the port on the switch $S_x$ which the port $P_z$ on the switch $S_y$ is connected to according to the corresponding MAC address set of each port on the switch $S_x$ in list_of_mac_set (it is possible that the port cannot be determined).
5) Update the set of devices connected to a switch.
Merge the set of devices connected to the switch $S_x$ into $S_y$. If $S_y$ already exists in switch_to_endpoint, update $S_y$ (=original $S_y+S_x$); if switch_to_endpoint does not contain $S_y$, add the merged $S_y$ to the end of switch_to_endpoint.
Likewise, merge the set of devices connected to $S_y$ into $S_x$, if $S_x$ already exists in switch_to_endpoint, update

$S_x$ (=original $S_x+S_y$); if switch_to_endpoint does not contain $S_x$, add the merged $S_x$ to the end of switch_to_endpoint.

6) If switches in the current network topology have been connected to form a complete topology, the algorithm ends; otherwise, the algorithm goes back to step 1) to continue performing processing.

If switch_to_endpoint is null and the switches are still not connected to form a complete topology, take the field saved for the latest equivalence class set selection, discard the previous selection, and make an attempt on the reselected equivalent relationship. If a topology cannot be constructed yet, go back to an earlier equivalence class set selection until a complete topology is constructed. Or a complete topology cannot be constructed after attempts are made on all equivalence class sets and the algorithm also ends at this moment.

It should be noted that in the network topology construction method provided by embodiment 1, when at least two terminal devices are connected to an access switch, the algorithm can accurately and completely construct a network topology (embodiment 1) consistent with the actual network connection condition; when only one (or even no) terminal device is connected to an access switch, the algorithm can still derive a complete network topology (embodiment 2), but the network topology, possibly inconsistent with the actual network connection condition, is an equivalent network topology.

Embodiment 2:

1. Initialization
Initialize list_of_mac_set=[] (list of MAC address set); initialize the network topology which comprises all n switches $S_i$ and all terminal devices, with no connection between switches and terminal devices.

2. Preprocess input data (MAC address tables of each port on each switch acquired through the SNMP and the MAC address of the port) and obtain (address table) the MAC address table list_of_mac_set of each port on each switch.

3. Determine the connections between switches and terminal devices according to the MAC address table of each port on each switch:

1) The terminal device connected to a port on a switch can be determined according to whether the MAC address table of the port on the switch contains a plurality of MAC addresses corresponding to the same device.

2) It can be determined that a terminal device is not directly connected to a port on the first switch by determining whether the MAC address table of the port on the switch contains MAC addresses of the terminal device and MAC addresses of ports on other switches.

4. Remove all MAC addresses other than MAC addresses of switch ports from list_of_mac_set, including:

1) MAC addresses of terminal devices;
2) MAC address of the management port of switches;
3) other unrelated MAC addresses.

Then obtain list_of_mac_set only associated with the connections between switches.

5. Derive the connection relationship between switches according to the addresses in the MAC address table of each port on each switch.

In an industrial control network, a ring network consisting of a plurality of switches is often supported so as to realize high reliability of the network. Logically, the network is not a ring (a backup link in the ring is not used for actual communication), but when a point in the network is interrupted, the link for backup will be started to recover the connections between switches. To construct and maintain such a ring network, it is necessary to configure a switch in the ring network as a management node (redundancy manager). The MAC addresses of the ports on the switch will be broadcast to the MAC address tables of different ports on all switches in the ring network. According to this feature, it is very easy to rule out such MAC addresses.

Therefore, the switches in the network are analyzed one by one according to list_of_mac_set generated after step 4:

1) The corresponding MAC address table of each port on the current switch is analyzed. If different ports on the switch all have MAC addresses of (different) ports on the same switch, the switch can be determined to a redundancy manager and the MAC addresses of the ports can be ruled out.

2) For each port whose MAC address table is not null on the current switch (the MAC address table contains only one MAC address in this case), it can be derived that the current port on the current switch is connected to the corresponding port (on another switch) of the MAC address.

The above-mentioned processing is performed repeatedly until all ports on all switches in list_of_mac_set are processed. So far, all switches have been connected to form a complete topology.

The network topology construction method provided by embodiment 1 and embodiment 2 is further described in detail below in combination with specific embodiments. Wherein, embodiments 3, 4 and 5 correspond to embodiment 1, and the second connection relationship is determined according to the MAC addresses of terminal devices in each MAC address table during a network topology construction; embodiment 6 corresponds to embodiment 2, and the second connection relationship is determined according to the MAC addresses of the ports on switches in each MAC address table during a network topology construction.

Embodiment 3:

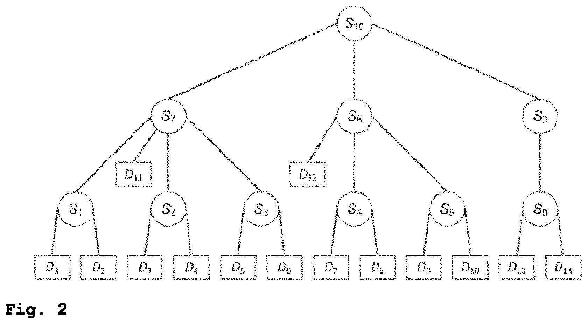

In the present embodiment, the network topology to be monitored is assumed to be what is shown in Fig. 2, wherein a circle represents a switch and a square represents a terminal device.

Supposing that the MAC address table of each switch is obtained in advance through an SNMP detection, then the derivation process of the network topology is as follows:

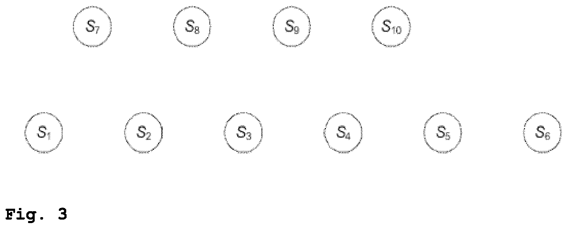

1. Initialize list_of_access_switch=[], switch_to_endpoint=[], and switch_to_switch=[], and initialize the network topology, as shown in Fig. 3.

2. Organize data in the MAC address tables of switch ports obtained through an SNMP detection to obtain list_of_mac_set shown in Table 2.

Table 2

| Switch | Port | MAC address set |
|---|---|---|
| $S_1$ | $P_1$ | $D_1$ |
| | $P_2$ | $D_2$ |
| | $P_3$ | $D_{11}, D_{12}, D_{13}, D_{14}$ |
| $S_2$ | $P_1$ | $D_3$ |
| | $P_2$ | $D_4$ |
| | $P_3$ | $D_{11}$ |
| $S_3$ | $P_1$ | $D_5$ |
| | $P_2$ | $D_6$ |
| | $P_3$ | $D_{11}, D_{13}, D_{14}$ |
| $S_4$ | $P_1$ | $D_7$ |
| | $P_2$ | $D_8$ |
| | $P_3$ | $D_{12}, D_{13}, D_{14}$ |
| $S_5$ | $P_1$ | $D_9$ |
| | $P_2$ | $D_{10}$ |
| | $P_3$ | $D_{11}, D_{12}$ |
| $S_6$ | $P_1$ | $D_{13}$ |
| | $P_2$ | $D_{14}$ |
| | $P_3$ | $D_1, D_2, D_5, D_6, D_7, D_8, D_{11}, D_{12}$ |

(continued)

| Switch | Port | MAC address set |
|---|---|---|
| $S_7$ | $P_1$ | $D_1, D_2,$ |
| | $P_2$ | $D_{11}$ |
| | $P_3$ | $D_3, D_4$ |
| | $P_4$ | $D_5, D_6$ |
| | $P_5$ | $D_{12}, D_{13}, D_{14}$ |
| $S_8$ | $P_1$ | $D_{12}$ |
| | $P_2$ | $D_7, D_8$ |
| | $P_3$ | $D_9, D_{10}$ |
| | $P_4$ | $D_{11}, D_{13}, D_{14}$ |
| $S_9$ | $P_1$ | $D_{13}, D_{14}$ |
| | $P_2$ | $D_1, D_2, D_5, D_6, D_7, D_8 D_{11}, D_{12}$ |
| $S_{10}$ | $P_1$ | $D_1, D_2, D_5, D_6, D_{11}$ |
| | $P_2$ | $D_7, D_8, D_9, D_{10} D_{12}$ |
| | $P_3$ | $D_{13}, D_{14}$ |

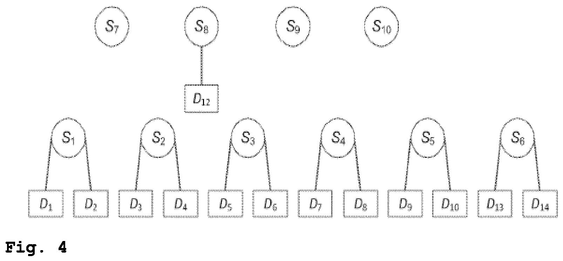

3. Identify the terminal device $D_i$, i=1...11, and connect it to the corresponding switch in the network topology, as shown in Fig. 4.
Construct (list of MAC address sets of an access switch) switch_to_endpoint=[$S_1$={$D_1,D_2$}, $S_2$={$D_3,D_4$}, $S_3$={$D_5,D_6$}, $S_4$={$D_7,D_8$}, $S_5$={$D_9,D_{10}$}, $S_6$={$D_{13},D_{14}$}, $S_8$={$D_{12}$}, {$S_2P_3$={$D_{11}$}, $S_7P_2$={$D_{11}$}}]
4. Construct switch_to_switch (list of MAC address sets between switches)
switch_to_switch=[$S_1P_3$={$D_{11},D_{12},D_{13},D_{14}$},     $S_3P_3$={$D_{11},D_{13},D_{14}$},     $S_4P_3$={$D_{12},D_{13},D_{14}$},     $S_5P_3$={$D_{11},D_{12}$}, $S_6P_3$={$D_1,D_2,D_5,D_6,D_7,D_8,D_{11},D_{12}$}, $S_7P_1$={$D_1,D_2$}, $S_7P_3$={$D_3,D_4$}, $S_7P_4$={$D_5,D_6$}, $S_7P_5$={$D_{12},D_{13},D_{14}$}, $S_8P_2$={$D_7,D_8$}, $S_8P_3$={$D_9,D_{10}$}, $SP_4$={$D_{11},D_{13},D_{14}$}, $S_9P_1$={$D_{13},D_{14}$}, $S_9P_2$={$D_1,D_2,D_5,D_6,D_7,D_8,D_{11},D_{12}$}, $S_{10}P_1$={$D_1,D_2,D_5,D_6,D_{11}$}, $S_{10}P_2$={$D_7,D_8,D_9,D_{10},D_{12}$}, $S_{10}P_3$={$D_{13},D_{14}$}]
5. Derive the connection relationship between switches based on the equivalent relationship.

(1) Take $S_1$={$D_1,D_2$} out of switch_to_endpoint, first search switch_to_switch for elements equivalent to {$D_1,D_2$} and find a unique $S_7P_1$={$D_1,D_2$}, then

in the network topology, connect the switch $S_1$ to the port $P_1$ on the switch $S_7$. According to the list_of_mac_set of the ports on the switch $S_1$, the port $P_1$ on the switch $S_7$ can be connected only to the port $P_3$ on the switch $S_1$. Delete $S_7P_1$={$D_1,D_2$} from switch_to_switch.
Since switch_to_endpoint originally does not contain $S_7$, add $S_7$={$D_1,D_2$} to the end of switch_to_endpoint.

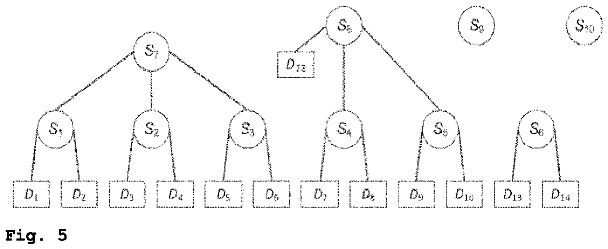

(2) Take $S_2$={$D_3,D_4$}, $S_3$={$D_5,D_6$}, $S_4$={$D_7,D_8$} and $S_5$={$D_9,D_{10}$} out of switch_to_endpoint in turn and similarly perform corresponding processing (differently, switch_to_endpoint already contains $S_7$, and the new device is added to the existing set $S_7$ at this time) to obtain the network topology shown in Fig. 5.

(3) Take $S_6$={$D_{13},D_{14}$} out of switch_to_endpoint and search switch_to_switch for elements equivalent to {$D_{13},D_{14}$}. Two elements $S_9P_1$={$D_{13},D_{14}$}and $S_{10}P_3$={$D_{13},D_{14}$}are matched. At this time, it is impossible to determine whether the switch $S_6$ is connected to the switch $S_9$ or the switch $S_{10}$. Thus, it is necessary to create an equivalence class set {$S_9P_1$=$S_6$, $S_{10}P_3$=$S_6$} and add it to the end of switch_to_endpoint.

At this time,
switch_to_endpoint=[$S_8$={$D_{12},D_7,D_8,D_9,D_{10}$}, {$S_2P_3$={$D_{11}$}, $S_7P_2$={$D_{11}$}}, $S_7$={$D_1,D_2,D_3,D_4,D_5,D_6$}, {$S_9P_1$=$S_6$, $S_{10}P_3$=$S_6$}];
switch_to_switch=[$S_1P_3$={$D_{11},D_{12},D_{13},D_{14}$},   $S_3P_3$={$D_{11},D_{13},D_{14}$},   $S_4P_3$={$D_{12},D_{13},$   $D_{14}$},   $S_5P_3$={$D_{11},D_{12}$},

$S_6P_3=\{D_1,D_2,D_5,D_6,D_7,D_8,D_{11}, \quad D_{12}\}, \quad S_7P_5=\{D_{12},D_{13}, \quad D_{14}\}, \quad S_8P_4=\{D_{11},D_{13},D_{14}\},$
$S_9P_2=\{D_1,D_2,D_5,D_6,D_7,D_8,D_{11},D_{12}\}, \quad S_{10}P_1=\{D_1,D_2,D_5,D_6,D_{11}\}, \quad S_{10}P_2=\{D_7,D_8,D_9,D_{10},D_{12}\}, \quad S_9P_1=\{D_{13},D_{14}\},$
$S_{10}P_3=\{D_{13},D_{14}\}].$

(4) Take $S_8=\{D_{12},D_7,D_8,D_9,D_{10}\}$ out of switch_to_endpoint and search switch_to_switch for corresponding equivalent elements.

Only $S_{10}P_2=\{D_7,D_8,D_9,D_{10},D_{12}\}$ is matched.
Connect the switch $S_8$ to the port $P_2$ on the switch $S_{10}$ in the network topology.
Delete $S_{10}P_2=\{D_7,D_8,D_9,D_{10},D_{12}\}$ from switch_to_switch.
Since switch_to_endpoint originally does not contain $S_7$, add $S_{10}=\{D_7,D_8,D_9,D_{10},D_{12}\}$ to the end of switch_to_endpoint.

(5) Take an equivalence class set $\{S_2P_3=\{D_{11}\}, S_7P_2=\{D_{11}\}\}$ out of switch_to_endpoint and make inferences in turn.

First assume that $D_{11}$ is connected to the port $P_3$ on the switch $S_2$. From the previous inference, it can be learned that the port is already used for connecting the switch $S_7$ and thus the assumption is infeasible.
Then assume that $D_{11}$ is connected to the port $P_2$ on the switch $S_7$. Since it has been inferred that the port $P_3$ on the switch
is connected to the port $P_3$ on the switch $S_7$, it is natural to obtain $S_2P_3-\{D_{11}\}$. Therefore, the assumption holds. Based on the above-mentioned derivation,
connect the device $D_{11}$ to the port $P_2$ on the switch $S_7$ in the network topology, and
add $D_{11}$ to $S_7$ in switch_to_endpoint.

(6) Take $S_7=\{D_1,D_2,D_3,D_4,D_5,D_6,D_{11}\}$ out of switch_to_endpoint and search switch_to_switch for corresponding equivalent elements.

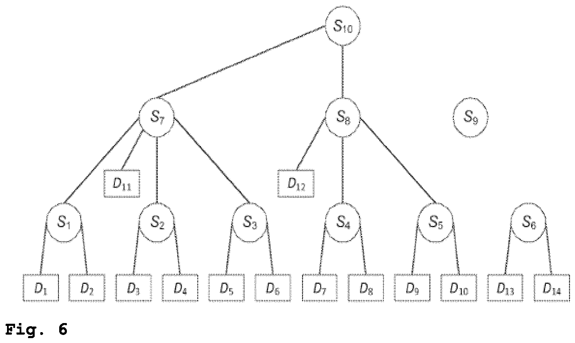

No element is matched.
Further, search switch_to_switch for the subsets of $S_7$ (in a decreasing sequence of the sizes of the subsets).
Only $S_{10}P_1=\{D_1,D_2,D_5,D_6,D_{11}\}$ can be matched.
Connect the switch $S_7$ to the port $P_1$ on the switch $S_{10}$ in the network topology.
Delete $S_{10}P_1=\{D_1,D_2,D_5,D_6,D_{11}\}$ from switch_to_switch.
Add $\{D_1,D_2,D_5,D_6,D_{11}\}$ to the set $S_{10}$ in switch_to_endpoint.
Now, the network topology is shown in Fig. 6.

(7) Take an equivalent relationship $\{S_9P_1=S_6,S_{10}P_3=S_6\}$ out of switch_to_endpoint and make inferences in turn.

First assume that the switch $S_6$ is connected to the port $P_3$ on the switch $S_{10}$. Then, the equivalent relationship $\{S_9P_1=S_6,S_{10}P_3=S_6\}$ possibly appears only when the switch $S_9$ is still connected to the switch $S_{10}$. However, the switch $S_{10}$ has three network ports in total according to list_of_mac_set, one is connected to the switch $S_7$, one is connected to the switch $S_8$, and it is impossible that the remaining port is simultaneously connected to the switch $S_6$ and the switch $S_9$. Therefore, the assumption does not hold.
Assume that the switch $S_6$ is connected to the port $P_1$ on the switch $S_9$. No evidence shows that the assumption is contradictory.
Based on the above-mentioned derivation,

connect the device $D_6$ to the port $P_1$ on the switch $S_9$ in the network topology, and
add $S_9=\{D_{13},D_{14}\}$ to the end of switch_to_endpoint.

(8) Take $S_{10}=\{D_1,D_2,D_5,D_6,D_{11},D_7,D_8,D_9,D_{10},D_{12}\}$ out of switch_to_endpoint and search switch_to_switch for corresponding equivalent elements. No element is matched. Further, search switch_to_switch for subsets of $S_{10}$ (in a decreasing sequence of sizes of the subsets). Wherein, the subset $\{D_1,D_2,D_5,D_6,D_7,D_8,D_{11},D_{12}\}$ can match two elements: $S_6P_3=\{D_1,D_2,D_5,D_6,D_7,D_8,D_{11},D_{12}\}$ and $S_9P_2=\{D_1,D_2,D_5,D_6,D_7,D_8,D_{11},D_{12}\}$ . An analysis shows that the two sets reflect the connection relationship between $S_9$ and $S_6$, obtained in step 7. Thus, delete $S_6P_3=\{D_1,D_2,D_5,D_6,D_7,D_8,D_{11},D_{12}\}$ and $S_9P_2=\{D_1,D_2,D_5,D_6,D_7,D_8,D_{11}, D_{12}\}$ from switch_to_switch.
(9) Take $S_9=\{D_{13},D_{14}\}$ out of switch_to_endpoint and search switch_to_switch for elements equivalent to $\{D_{13},D_{14}\}$. Two elements $S_9P_1=\{D_{13},D_{14}\}$ and $S_{10}P_3=\{D_{13},D_{14}\}$ are matched (again). Wherein, $S_9P_1=\{D_{13},D_{14}\}$, a reflection of the current $S_9=\{D_{13},D_{14}\}$, is skipped. Thus,

connect the switch $S_9$ to the port $P_3$ on the switch $S_{10}$ in the network topology, and delete $S_9P_1=\{D_{13},D_{14}\}$ and $S_{10}P_3=\{D_{13},D_{14}\}$ from switch_to_switch.

At this time, switch_to_endpoint is null and all switches are mutually connected (to form an arbitrary reachable topology). The algorithm ends. It can be seen that the algorithm accurately derives the original network topology.

Embodiment 4:

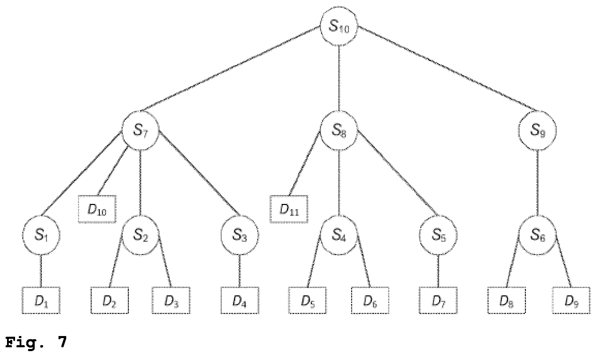

In the present embodiment, the network topology to be monitored is assumed to be what is shown in Fig. 7, wherein a circle represents a switch and a square represents a terminal device.

Since the MAC address table of a port on a switch is associated with whether communication exists between devices, the following assumptions are made in the present embodiment:

D1 to D4 communicate with only D10,
D5 to D7 communicate with only D11,
and D8, D9, D10 and D11 communicate with each other.

Supposing that the MAC address table of each switch is obtained through an SNMP detection, then the derivation process of the network topology is as follows:

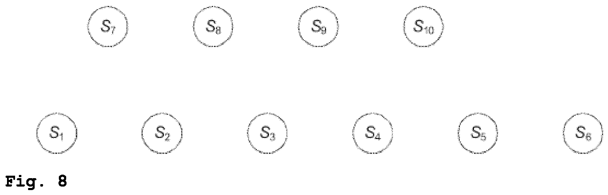

1. Initialize list_of_mac_set=[], switch_to_endpoint=[], and switch_to_switch=[], and initialize the network topology, as shown in Fig. 8.

2. Organize data in the MAC address tables of switch ports obtained through an SNMP detection to obtain list_of_mac_set shown in Table 3.

Table 3

| Switch | Pert | MACaddressset |
|---|---|---|
| $S_1$ | $P_1$ | $D_1$ |
| | $P_2$ | $D_2$ |
| | $P_3$ | $D_{10}$ |
| $S_2$ | $P_1$ | $D_2$ |
| | $P_2$ | $D_3$ |
| | $P_3$ | $D_{10}$ |
| $S_3$ | $P_1$ | $D_4$ |
| | $P_2$ | $D_{10}$ |
| $S_4$ | $P_1$ | $D_5$ |
| | $P_2$ | $D_6$ |
| | $P_3$ | $D_{11}$ |
| $S_5$ | $P_1$ | $D_7$ |
| | $P_2$ | $D_{11}$ |
| $S_6$ | $P_1$ | $D_8$ |
| | $P_2$ | $D_9$ |
| | $P_3$ | $D_{10},D_{11}$ |
| $S_7$ | $P_1$ | $D_1$ |
| | $P_2$ | $D_{10}$ |
| | $P_3$ | $D_2,D_3$ |
| | $P_4$ | $D_4$ |
| | $P_5$ | $D_8,D_9,D_{11}$ |

(continued)

| Switch | Pert | MACaddressset |
|---|---|---|
| $S_8$ | $P_1$ | $D_{11}$ |
| | $P_2$ | $D_5,D_6$ |
| | $P_3$ | $D_7$ |
| | $P_4$ | $D_8,D_9,D_{10}$ |
| $S_9$ | $P_1$ | $D_8,D_9$ |
| | $P_2$ | $D_{10},D_{11}$ |
| $S_{10}$ | $P_1$ | $D_{10}$ |
| | $P_2$ | $D_{11}$ |
| | $P_3$ | $D_8,D_9$ |

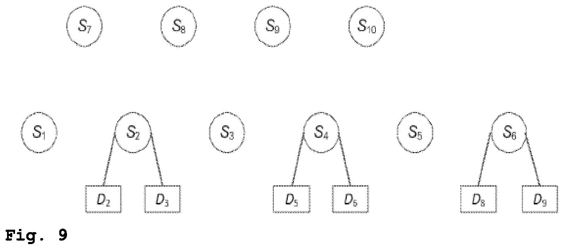

3. Identify the terminal device $D_i$, i=1...11, and connect it to the corresponding switch in the network topology, as shown in Fig. 9.

Construct a list of MAC address sets of the access switch: switch_to_endpoint=[$S_2$={$D_2,D_3$}, $S_4$={$D_5,D_6$}, $S_6$={$D_8,D_9$}, {$S_7P_1$={$D_1$}, $S_1P_1$={$D_1$}}, {$S_1P_2$={$D_{10}$}, $S_2P_3$={$D_{10}$}, $S_3P_2$={$D_{10}$}, $S_7P_2$={$D_{10}$}, $S_{10}P_1$={$D_{10}$}}, {$S_3P_1$={$D_4$}, $S_7P_4$={$D_4$}}, {$S_5P_1$={$D_7$}, $S_8P_3$={$D_7$}}, {$S_4P_3$={$D_{11}$}, $S_5P_2$={$D_{11}$}, $S_8P_1$={$D_{11}$}, $S_{10}P_2$={$D_{11}$}}] .

Since other devices, for example, $D_1$ and $D_4$, simultaneously appear on ports of a plurality of switches, it is temporarily impossible to determine the switches which they are directly connected to.

4. Construct switch_to_switch (list of MAC address sets between switches) as follows:

switch_to_switch=  [$S_6P_3$={$D_{10},D_{11}$},  $S_7P_3$={$D_2,D_3$},  $S_8P_2$={$D_5,D_6$},  $S_8P_4$={$D_8,D_9,D_{10}$},  $S_9P_1$={$D_8,D_9$}, $S_9P_2$={$D_{10},D_{11}$}, $S_{10}P_3$={$D_8,D_9$}].

5. Derive the connection relationship between switches based on the equivalent relationship.

(1) Take $S_2$={$D_2,D_3$} out of switch_to_endpoint, first search switch_to_switch for elements equivalent to {$D_1,D_2$} and find a unique $S_7P_3$={$D_2,D_3$}, then

in the network topology, connect the switch to the port $P_3$ on the switch $S_7$. According to the list_of_mac_set of the ports on the switch $S_2$, the port $P_3$ on the switch $S_7$ can be connected only to the port $P_3$ on the switch $S_2$. Delete $S_7P_1$={$D_1,D_2$} from switch_to_switch. Since switch_to_endpoint originally does not contain $S_7$, add $S_7$={$D_2,D_3$} to the end of switch_to_endpoint.

(2) Take $S_4$={$D_5,D_6$} out of switch_to_endpoint, first search switch_to_switch for elements equivalent to {$D_5,D_6$} and find a unique $S_8P_2$={$D_5,D_6$}, then

in the network topology, connect the switch $S_4$ to the port $P_2$ on the switch $S_8$. According to the list_of_mac_set of the ports on the switch $S_4$, the port $P_2$ on the switch $S_8$ can be connected only to the port $P_3$ on the switch $S_4$. Delete $S_8P_2$={$D_5,D_6$} from switch_to_switch. Since switch_to_endpoint originally does not contain $S_8$, add $S_8$={$D_5,D_6$} to the end of switch_to_endpoint.

(3) Take $S_6$={$D_8,D_9$} out of switch_to_endpoint and search switch_to_switch for elements equivalent to {$D_8,D_9$}. Two elements $S_9P_1$={$D_8,D_9$} and $S_{10}P_3$={$D_8,D_9$} are matched. At this time, it is impossible to determine whether the switch $S_6$ is connected to the switch $S_9$ or the switch $S_{10}$. Thus, it is necessary to create an equivalence class set {$S_9P_1$=$S_6$, $S_{10}P_3$=$S_6$} and add it to the end of switch_to_endpoint. Meanwhile, delete $S_9P_1$={$D_8,D_9$} and $S_{10}P_3$={$D_8,D_9$} from switch_to_switch.

(4) Take an equivalence class set {$S_7P_1$={$D_1$}, $S_1P_1$={$D_1$}} out of switch_to_endpoint and make inferences in turn.

First assume that $D_1$ is connected to the port $P_1$ on the switch $S_7$. According to list_of_mac_set, the assumption currently may hold. Thus, save the existing selected field.

Based on the above-mentioned derivation,

save the remaining $S_1P_1=\{D_1\}$ in the equivalence class set into switch_to_switch.

Connect the device $D_1$ to the port $P_1$ on the switch $S_7$ in the network topology.

Add $D_1$ to $S_7$ in switch_to_endpoint.

(5) Take an equivalence class set $\{S_1P_2=\{D_{10}\},S_2P_3=\{D_{10}\},S_3P_2=\{D_{10}\},S_7P_2=\{D_{10}\},S_{10}P_1=\{D_{10}\}\}$ out of switch_to_endpoint and make inferences in turn.

First assume that $D_{10}$ is connected to the port $P_2$ on the switch $S_1$. According to list_of_mac_set, the assumption currently may hold.

Then, save the existing selected field.

Based on the above-mentioned derivation,

add the remaining $\{S_2P_3=\{D_{10}\}, S_3P_2=\{D_{10}\}, S_7P_2=\{D_{10}\}, S_{10}P_1=\{D_{10}\}\}$ in the equivalence class set to the end of switch_to_endpoint. Connect the device $D_{10}$ to the port $P_2$ on the switch $S_1$ in the network topology.

Since switch_to_endpoint originally does not contain $S_1$, add $S_1=\{D_{10}\}$ to the end of switch_to_endpoint.

(6) Take an equivalent relationship $\{S_3P_1=\{D_4\}, S_7P_4=\{D_4\}\}$ out of switch_to_endpoint and make inferences in turn.

First assume that $D_4$ is connected to the port $P_1$ on the switch $S_3$. According to list_of_mac_set, the assumption currently may hold. Thus, save the existing selected field.

Based on the above-mentioned derivation,

save the remaining $S_7P_4=\{D_4\}$ in the equivalence class set into switch_to_switch.

Connect the device $D_4$ to the port $P_1$ on the switch $S_3$ in the network topology.

Since switch_to_endpoint originally does not contain $S_3$, add $S_3=\{D_4\}$ to the end of switch_to_endpoint.

(7) Take an equivalent relationship $\{S_5P_1=\{D_7\}, S_8P_3=\{D_7\}\}$ out of switch_to_endpoint and make inferences in turn.

First assume that $D_7$ is connected to the port $P_1$ on the switch $S_5$. According to list_of_mac_set, the assumption currently may hold. Thus, save the existing selected field.

Based on the above-mentioned derivation,

save the remaining $S_8P_3=\{D_7\}$ in the equivalence class set into switch_to_switch.

Connect the device $D_7$ to the port $P_1$ on the switch $S_5$ in the network topology.

Since switch_to_endpoint originally does not contain $S_5$, add $S_5=\{D_7\}$ to the end of switch_to_endpoint.

(8) Take an equivalent relationship $\{S_4P_3=\{D_{11}\}, S_5P_2=\{D_{11}\}, S_8P_1=\{D_{11}\}, S_{10}P_2=\{D_{11}\}\}$ out of switch_to_endpoint and make inferences in turn.

First assume that $D_{11}$ is connected to the port $P_3$ on the switch $S_4$. According to list_of_mac_set, it can be determined that the port $P_3$ on the switch $S_4$ is already connected to the switch $S_8$, and therefore, the assumption does not hold.

Then assume that $D_{11}$ is connected to the port $P_2$ on the switch $S_5$. According to list_of_mac_set, it can be determined that $S_5$ has only two related ports and $P_1$ is connected to $D_7$. If $P_2$ is connected to (another terminal device) $D_{11}$, the switch has no network port to connect other switches. Thus, the current equivalence class set is formed. Therefore, the assumption does not hold, either.

Then assume that $D_{11}$ is connected to the port $P_1$ on the switch $S_8$. According to list_of_mac_set, the assumption holds. Thus, save the existing selected field.

Based on the above-mentioned derivation,

add the remaining $\{S_4P_3=\{D_{11}\}, S_5P_2=\{D_{11}\}, S_{10}P_2=\{D_{11}\}\}$ in the equivalence class set to the end of switch_to_endpoint. Connect the device $D_{11}$ to the port $P_1$ on the switch $S_8$ in the network topology.

Merge $Ss=\{D_{11}\}$ into $S_1$ in switch_to_endpoint.

(9) Take $S_7=\{D_2,D_3,D_1\}$ out of switch_to_endpoint and search switch_to_switch for elements equivalent to $\{D_2,D_3,D_1\}$. No element is found.

Thus, construct the subset of $\{D_2,D_3,D_1\}$ in a decreasing sequence of the sizes of subsets and search switch_to_switch for the corresponding subset. Finally, a unique $S_1P_1=\{D_1\}$ is found according to $\{D_1\}$. Then,

in the network topology, connect the switch $S_7$ to the port $P_1$ on the switch $S_1$. According to the list_of_mac_set of the ports on the switch $S_7$, the port $P_1$ on the switch $S_1$ can be connected only to the port $P_2$ on the switch $S_7$.

Since $S_1=\{D_{10}\}$, it is natural to expand $S_7=\{D_2,D_3,D_1,D_{10}\}$. Add it to the end of switch_to_endpoint.

Delete $S_1P_1=\{D_1\}$ from switch_to_switch.

Merge $D_1$ into $S_1$ in switch_to_endpoint.

(10) Take $S_8=\{D_5,D_6,D_{11}\}$ out of switch_to_endpoint and search switch_to_switch for elements equivalent to $\{D_5,D_6,D_{11}\}$ and the subsets thereof. No element is found. Thus, put $S_8=\{D_5,D_6,D_{11}\}$ back to the end of switch_to_endpoint.

(11) Take an equivalent relationship $\{S_9P_1=S_6, S_{10}P_3=S_6\}$ out of switch_to_endpoint and make inferences in turn.

First assume that $S_6$ is connected to the port $P_1$ on the switch $S_9$. According to list_of_mac_set, the assumption holds. Thus, save the existing selected field.

Based on the above-mentioned derivation,

save the remaining $S_{10}P_3=\{D_8,D_9\}$ in the equivalence class set into switch_to_switch.

Connect the switch $S_6$ to the port $P_1$ on the switch $S_9$ in the network topology.

Add $S_9=\{D_8,D_9\}$ to the end of switch_to_endpoint.

(12) Take an equivalent relationship $\{S_2P_3=\{D_{10}\}, S_3P_2=\{D_{10}\}, S_7P_2=\{D_{10}\}, S_{10}P_1=\{D_{10}\}\}$ out of switch_to_endpoint and make inferences in turn.

Since it has been inferred that $D_{10}$ is connected to the switch $S_1$, the switch $S_1$ is connected to the switch $S_7$ and the switch $S_7$ is connected to the switch in the existing network topology, $S_2P_3=\{D_{10}\}$ is satisfied and can be skipped.

For $S_3P_2=\{D_{10}\}$, first assume that the device is directly connected to the switch $S_1$. According to list_of_mac_set, the assumption does not hold.

Then assume that the device is connected to the switch $S_7$. According to the available information, the assumption holds. According to list_of_mac_set, it can also be derived that the switch $S_3$ is connected to the port $P_4$ on the switch $S_7$.

Based on the above-mentioned derivation,

save the remaining $S_{10}P_1=\{D_{10}\}$ in the equivalence class set into switch_to_switch and delete $S_7P_4=\{D_4\}$ from switch_to_switch. Connect the switch $S_3$ to the port $P_4$ on the switch $S_7$ in the network topology.

Add $S_3=\{D_4,D_{10}\}$ and $S_3=\{D_4\}$ to the end of switch_to_endpoint.

(13) Take $S_1=\{D_{10},D_1\}$ out of switch_to_endpoint and search switch_to_switch for elements equivalent to $\{D_{10},D_1\}$ and the subsets thereof. No element is found. Thus, put $S_1=\{D_{10},D_1\}$ back to the end of switch_to_endpoint.

(14) Take an equivalent relationship $\{S_4P_3=\{D_{11}\}, S_5P_2=\{D_{11}\}, S_{10}P_2=\{D_{11}\}\}$ out of switch_to_endpoint and make inferences in turn.

Since it has been inferred that $D_{11}$ is connected to the switch $S_8$ and the switch $S_4$ is connected to the switch $S_8$ according to the existing network topology, $S_4P_3=\{D_{11}\}$ is satisfied and can be skipped.

For $S_5P_2=\{D_{11}\}$,

first assume that the device is directly connected to the switch $S_8$. According to list_of_mac_set, the assumption holds. According to list_of_mac_set, it can also be derived that the switch $S_5$ is connected to the port $P_3$ on the switch $S_8$.

Based on the above-mentioned derivation,

save the remaining $S_{10}P_2=\{D_{11}\}$ in the equivalence class set into switch_to_switch.

Connect the switch $S_5$ to the port $P_3$ on the switch $S_8$ in the network topology.

Add $S_5=\{D_7,D_{11}\}$ and $S_8=\{D_7\}$ to switch_to_endpoint.

(15) Take an equivalent relationship $\{S_4P_3=\{D_{11}\}, S_5P_2=\{D_{11}\}, S_{10}P_2=\{D_{11}\}\}$ out of switch_to_endpoint and make inferences in turn.

Since it has been inferred that $D_{11}$ is connected to the switch $S_8$ and the switch $S_4$ is connected to the switch $S_8$ according to the existing network topology, $S_4P_3=\{D_{11}\}$ is satisfied and can be skipped.

Similarly, $S_5$ is connected to $S_8$ according to the existing network topology. Thus, $S_5P_2=\{D_{11}\}$ is satisfied and can be skipped.

For $S_{10}P_2=\{D_{11}\}$,

first assume that the device is directly connected to the switch $S_8$. According to list_of_mac_set, the assumption holds. According to list_of_mac_set, it can also be derived that the switch $S_{10}$ is connected to the port $P_4$ on the switch $S_8$.

Based on the above-mentioned derivation,

connect the device $S_{10}P_2$ to the port $P_4$ on the switch $S_8$ in the network topology.

Add $S_{10}=\{D_5,D_6,D_{11},D_7\}$ to switch_to_endpoint.

(16) Take $S_7=\{D_2,D_3,D_1,D_4,D_{10}\}$ out of switch_to_endpoint and search switch_to_switch for elements equivalent to $\{D_2,D_3,D_1,D_4,D_{10}\}$. No element is found.

Thus, construct the subset of $\{D_2,D_3,D_1,D_4,D_{10}\}$ in a decreasing sequence of the sizes of subsets and search switch_to_switch for the corresponding subset. Finally, a unique $S_{10}P_2=\{D_{11}\}$ is found according to $\{D_{11}\}$. Then, in the network topology, connect the switch $S_7$ to the port $P_1$ on the switch $S_{10}$. According to the list_of_mac_set of the ports on the switch $S_7$, the port $P_1$ on the switch $S_{10}$ can be connected only to the port $P_4$ on the switch $S_7$.

Thus, $S_{10}=\{D_2, D_3, D_1, D_4, D_{10}\}$ can be expanded into switch_to_endpoint.

Delete $S_{10}P_2=\{D_{11}\}$ from switch_to_switch.

Merge $D_1$ into $S_1$ in switch_to_endpoint.

(17) Take $S_8=\{D_5,D_6,D_{11},D_7\}$ out of switch_to_endpoint and search switch_to_switch for elements equivalent to $\{D_5,D_6,D_{11},D_7\}$. No element is found.

Thus, construct the subset of $\{D_5, D_6, D_{11}, D_7\}$ in a decreasing sequence of the sizes of subsets and search switch_to_switch for the corresponding subset. Finally, a unique $S_8P_3=\{D_7\}$ is found according to $\{D_{11}\}$. Then, in the network topology, the switch $S_8$ is already connected to the switch $S_{10}$ and thus can be skipped.

(18) Take $S_9=\{D_8, D_9\}$ out of switch_to_endpoint and search switch_to_switch for elements equivalent to $\{D_8, D_9\}$. The unique $S_{10}P_3=\{D_8, D_9\}$ is matched. Then,
connect the switch $S_9$ to the port $P_3$ on the switch $S_{10}$ in the network topology.

In addition, according to the ports of $S_9$ (according to list_of_mac_set), the port $P_1$ of $S_{190}$ can be connected only to the port $P_3$ of the switch $S_{10}$.

Thus, $S_{10}=\{D_8, D_9\}$ can be expanded into switch_to_endpoint. Delete $S_{10}P_3=\{D_8, D_9\}$ from switch_to_switch.

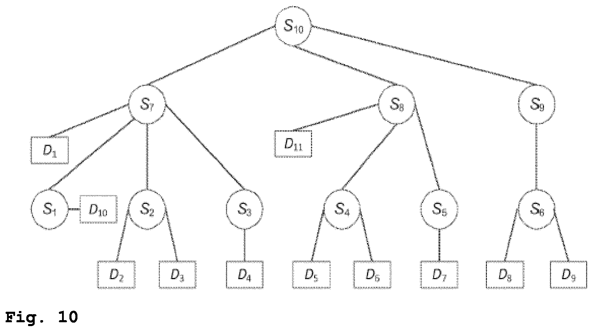

So far, all switches have been connected to form an integral body. The algorithm ends. The obtained network topology is shown in Fig. 10.

This topology is equivalent to the original topology. The only difference is that the switches which $D_1$ and $D_{10}$ are connected to are different. It is very easy to manually adjust the difference to obtain an accurate original topology.

Embodiment 5:

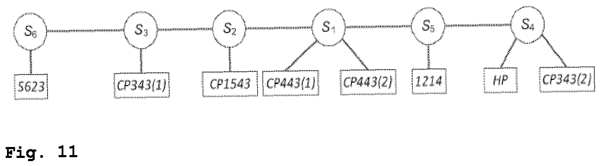

The network adopted in the present embodiment is a common operational technology (OT) network consisting of a plurality of switches. Fig. 11 shows the network topology, wherein a circle represents a switch and a square represents a terminal device.

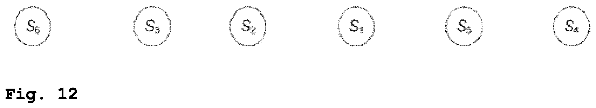

1. Initialize list_of_mac_set=[], switch_to_endpoint=[], and switch_to_switch=[], and initialize the network topology, as shown in Fig. 12.

2. Organize data in the MAC address tables of switch ports obtained through an SNMP detection to obtain list_of_mac_set shown in Table 4, and map it into symbols of corresponding devices (obtained through the SNMP detection).

In the present embodiment, the ports on each switch and the management port on the switch have their own MAC addresses, and the MAC addresses also appear in the MAC address table of each port on each switch. The MAC address in the form of "XX-XX-XX-XX-XX-XX SmPn" represents the MAC address of the port n on the switch m.

Table 4

| Switch | Port | MAC address set | |
|--------|------|-----------------|---|
| $S_1$ | $P_1$ | 00-1B-1B-87-4A-81 | S623 |
| | | 00-1B-1B-91-6B-DE | S4P2 |
| | | 00-1B-1B-91-6C-01 | S2P2 |
| | $P_2$ | 00-1B-1B-91-6B-DD | S4P1 |
| | | 00-1B-1B-91-6B-FB | SSP1 |
| | | 00-1C-06-1D-41-88 | 1214 |
| | | 08-00-06-01-00-00 | |
| | | EC-8E-B5-92-CB-75 | HP |
| | $P_3$ | 00-1B-1B-91-95-C2 | CP443(1) |
| | | 00-1B-1B-91-95-C5 | |
| | $P_4$ | 00-1B-1B-91-97-1E | CP443(2) |
| | | 00-1B-1B-91-97-21 | |
| $S_2$ | $P_1$ | 00-1B-1B-87-4A-81 | S623 |
| | | 00-1B-1B-91-6B-DE | S4P2 |
| | | 00-1B-1B-91-6B-ED | S3P2 |
| | $P_2$ | 00-1B-1B-91-6B-DD | S4P1 |
| | | 00-1B-1B-91-6D-E7 | S1P1 |
| | | 00-1B-1B-91-95-C2 | CP443(1) |
| | | 00-1B-1B-91-97-1E | CP443(2) |

(continued)

| Switch | Port | MAC address set | |
|---|---|---|---|
| | | 00-1C-06-1D-41-88 | 1214 |
| | | 08-00-06-01-00-00 | |
| | | EC-8E-B5-92-CB-75 | HP |
| | $P_3$ | | |
| | $P_4$ | 00-1B-1B-8A-A2-6B | CP1543 |
| $S_3$ | $P_1$ | 00-1B-1B-87-4A-81 | S623 |
| | | 00-1B-1B-91-6B-DE | S4P2 |
| | | 00-1B-1B-91-6B-E3 | S6P2 |
| | $P_2$ | 00-1B-1B-8A-A2-6B | CP1543 |
| | | OD-1B-10-91-6B-DD | S4P1 |
| | | 00-1B-1B-91-6C-00 | S2P1 |
| | | 00-1B-1B-91-95-C2 | CP443(1) |
| | | 00-1B-1B-91-97-1E | CP443(2) |
| | | 00-1C-06-1D-41-88 | 1214 |
| | | 08-00-06-01-00-00 | |
| | | EC-8E-B5-92-CB-75 | HP |
| | $P_3$ | | |
| | $P_4$ | 00-1B-1B-90-56-49 | CP343(1) |
| | | 00-1B-10-90-56-4A | |
| $S_4$ | $P_1$ | 00-1B-1B-87-4A-81 | S623 |
| | | 00-1B-1B-91-6B-B6 | S1 |
| | | 00-1B-1B-91-6B-EB | S3 |
| | | 00-1B-1B-91-6B-FC | S5P2 |
| | | 00-1B-1B-91-6B-FF | S2 |
| | $P_2$ | | |
| | $P_3$ | EC-8E-B5-92-CB-75 | HP |
| | $P_4$ | 00-1B-1B-C5-2E-D2 | CP343(2) |
| | | 08-00-06-01-00-00 | |
| $S_5$ | $P_1$ | OD-1B-1B-87-4A-81 | S623 |
| | | 00-1B-1B-91-6B-DE | S4P2 |
| | | 00-1B-1B-91-6B-E6 | S1 |
| | | 00-1B-1B-91-6B-E8 | S1P2 |
| | | 00-1B-1B-91-6B-EB | S3 |
| | | 00-1B-1B-91-6B-FF | S2 |
| | $P_2$ | 00-1B-1B-91-6B-DD | S4P1 |
| | | 08-00-06-01-00-00 | |
| | | EC-8E-B5-92-CB-75 | HP |
| | $P_3$ | | |
| | $P_4$ | 00-1C-06-1D-41-88 | 1214 |
| | | 00-1C-06-1D-41-89 | |

(continued)

| Switch | Port | MAC address set | |
|--------|------|-----------------|---|
| $S_6$ | $P_1$ | 00-1B-1B-91-6B-D3 | S4P2 |
| | $P_2$ | 00-1B-1B-8A-A2-6B | CP1543 |
| | | 00-1B-1B-90-56-49 | CP343(1) |
| | | 00-1B-1B-91-6B-DD | S4P1 |
| | | 00-1B-1B-91-6B-EC | S3P1 |
| | | 00-1B-1B-91-95-C2 | CP443(1) |
| | | 00-1B-1B-91-97-1E | CP443(2) |
| | | 00-1C-06-1D-41-88 | 1214 |
| | | 08-00-06-01-00-00 | |
| | | EC-8E-B5-92-CB-75 | **HP** |
| | $P_3$ | 00-1B-1B-87-4A-81 | S623 |
| | $P_4$ | | |

The algorithm commonly utilizes terminal devices in the MAC address tables of switches for analyses, instead of utilizing the MAC addresses of ports on switches to derive the connection relationship between switches. However, port information of switches can help to determine whether a terminal device is directly connected to a switch. For example, although the switch S623 appears on a port on each switch, only the port $S_6P_3$ has the MAC address of the switch S623 and the other ports on which the switch S623 appears also have MAC addresses of other ports. Thus, it can be inferred that the switch S623 is directly connected to the port $S_6P_3$.

The list_of_mac_set obtained after the MAC address of the switch is removed (again) is shown in Table 5.

Table 5

| Switch | Port | MAC address set |
|--------|------|-----------------|
| $S_1$ | $P_1$ | S623 |
| | $P_2$ | 1214, HP |
| | $P_3$ | CP443(1)* |
| | $P_4$ | CP443(2)* |
| $S_2$ | $P_1$ | S623 |
| | $P_2$ | CP443(1), CP443(2), 1214, HP |
| | $P_3$ | |
| | $P_4$ | CP1543 |
| $S_3$ | $P_1$ | S623 |
| | $P_2$ | CP1543, CP443(1), CP443(2), 1214. HP |
| | $P_3$ | |
| | $P_4$ | CP343(1)* |
| $S_4$ | $P_1$ | 8623 |
| | $P_2$ | |
| | $P_3$ | HP* |
| | $P_4$ | CP343(2)* |

(continued)

| Switch | Port | MAC address set |
|--------|------|-----------------|
| $S_5$ | $P_1$ | S623 |
| | $P_2$ | HP |
| | $P_3$ | |
| | $P_4$ | 1214* |
| $S_6$ | $P_1$ | |
| | $P_2$ | CP1543, CP343(1), CP443(1), CP443(2), 1214, HP |
| | $P_3$ | S623* |
| | $P_4$ | |

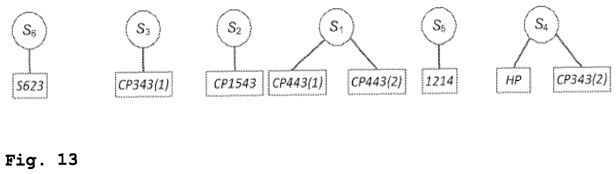

3. Identify the terminal device $D_i$, i=1...11, and connect it to the corresponding switch in the network topology, as shown in Fig. 13.

Construct a list of MAC address sets of the access switch: switch_to_endpoint=[$S_1$={CP443(1),CP443(2)},$S_2$={CP1543},$S_3$={CP343(1) },$S_4$={HP,CP343 (2) },$S_5$={1214},$S_6$={S623}] .

4. Construct switch_to_switch list of MAC address sets between switches as follows: switch_to_switch=[$S_1P_1$={S623},$S_1P_2$={1214,HP},$S_2P_1$={S623},$S_2P_2$={CP 443(1),CP443(2),1214,HP},$S_3P_1$={S623},$S_3P_2$={CP1543,CP443(1),CP443 (2),1214,HP},$S_4P_1$={S623},$S_5P_1$={S623},$S_5P_2$={HP},$S_6P_2$={CP1543,CP343 (1),CP443(1),CP443(2),1214,HP}.

5. Derive the connection relationship between switches based on the equivalent relationship.

(1) Take $S_1$={CP443(1),CP443(2)} out of switch_to_endpoint and search switch_to_switch for elements equivalent to {CP443(1),CP443(2)} and the subsets thereof. No element is found. Thus, put $S_1$={CP443(1),CP443(2)} back to the end of switch_to_endpoint.

(2) Take $S_2$={CP1543} out of switch_to_endpoint and search switch_to_switch for elements equivalent to {CP1543}. No element is found. Thus, put $S_2$={CP1543} back to the end of switch_to_endpoint.

(3) Take $S_3$={CP343(1)} out of switch_to_endpoint and search switch_to_switch for elements equivalent to {CP343(1)}. No element is found. Thus, put $S_3$={CP343(1)} back to the end of switch_to_endpoint.

At this time, switch_to_endpoint=[$S_4$={HP,CP343(2)},$S_5$={1214},$S_6$={S623},$S_1$={CP4 43(1),CP443(2)},$S_2$={CP1543},$S_3$={CP343(1)}]
switch_to_switch=[$S_1P_1$={S623},$S_4P_2$={1214,HP},$S_2P_1$={S623},$S_2P_2$={CP 443(1),CP443(2),1214,HP},$S_3P_1$={S623},$S_3P_2$={CP1543,CP443(1),CP443 (2),1214,HP},$S_4P_1$={S623},$S_5P_1$={S623},$S_5P_2$={HP},$S_6P_2$={CP1543,CP343 (1),CP443(1),CP443(2),1214,HP}

(4) Take $S_4$={HP,CP343(2)} out of switch_to_endpoint and search switch_to_switch for elements equivalent to {HP,CP343(2)}. No element is found.

Thus, construct the subset of {HP,CP343(2)} in a decreasing sequence of the sizes of subsets and search switch_to_switch for the corresponding subset. Finally, a unique $S_5P_2$={HP} is found according to {HP}. Then, connect the switch $S_4$ to the port $P_2$ on the switch $S_5$ in the network topology.

Thus, $S_5$={1214,HP,CP343(2)} can be expanded into switch_to_endpoint.

Delete $S_5P_2$={HP} from switch_to_switch.

At this time, switch_to_endpoint=[$S_5$={1214,HP,CP343(2)},$S_6$={S623},$S_1$={CP443(1 ),CP443(2)},$S_2$={CP1543},$S_3$={CP343(1)}]
switch_to_switch=[$S_1P_1$={S623},$S_1P_2$={1214,HP},$S_2P_1$={S623},$S_2P_2$={CP 443(1),CP443(2),1214,HP},$S_3P_1$={S623},$S_3P_2$={CP1543,CP443(1),CP443 (2),1214,HP},$S_4P_1$={S623},$S_5P_1$={S623},$S_6P_2$={CP1543,CP343(1),CP443 (1),CP443(2),1214,HP}]

(5) Take $S_5$={1214,HP,CP343(2)} out of switch_to_endpoint and search switch_to_switch for elements equivalent to {1214,HP,CP343(2)}. No element is found.

Thus, construct the subset of {1214,HP,CP343(2)} in a decreasing sequence of the sizes of subsets and search switch_to_switch for the corresponding subset. Finally, a unique $S_1P_2$={1214,HP} is found according to {1214,HP}. Then,

connect the switch $S_5$ to the port $P_2$ on the switch $S_1$ in the network topology.

Thus, $S_5$={CP443(1),CP443(2),1214,HP,CP343(2)} can be expanded into switch_to_endpoint.

Delete $S_1P_2$={1214,HP} from switch_to_switch.

According to the operation described in step 5.5 of the algorithm, $S_1$ should be expanded and $S_5$ should be deleted. After the operations, the following are obtained: switch_to_endpoint=[$S_6$={S623}, $S_1$={CP443(1),CP443(2),1214,HP,CP343(2),$S_2$={CP1543},$S_3$={CP343(1) }]; switch_to_switch= [$S_1P_1$={S623},$S_2P_1$={S623},$S_2P_2$={CP443(1),CP443(2 ),1214,HP},$S_3P_1$={S623},$S_3P_2$={CP1543,CP443(1),CP443(2), 1214,HP},$S_4P_1$={S623},$S_5P_1$={S623},$S_6P_2$={CP1543,CP343(1),CP443(1),CP443(2),1 214,HP}];

(6) Take $S_6$={S623} out of switch_to_endpoint and search switch_to_switch for elements equivalent to {S623}. A plurality of elements: $S_1P_1$={S623},$S_2P_1$={S623},$S_3P_1$={S623},$S_4P_1$={S623},$S_5P_1$={S623} are matched.

At this time, it is impossible to determine the connection relationship between switches according to S623. Thus, create an equivalence class set {$S_1P_1$={S623},$S_2P_1$={S623},$S_3P_1$={S623},$S_4P_1$={S623},$S_5P_1$={S623}}, add it to the end of switch_to_endpoint, and delete $S_1P_1$={S623},$S_2P_1$={S623},$S_3P_1$={S623},$S_4P_1$={S623},$S_5P_1$={S623} from switch_to_switch.

According to the step described in section 5.2.3 of the algorithm, generate an equivalence class set {$S_1P_1$=$S_6$,$S_2P_1$=$S_6$,,$S_3P_1$=$S_6$,$S_4P_1$=$S_6$,$S_5P_1$=$S_6$}. At this time, switch_to_endpoint=[$S_1$={CP443(1),CP443(2),1214,HP,CP343(2},$S_2$={ CP1543},$S_3$={CP343(1)},{$S_1P_1$=$S_6$,$S_2P_1$=$S_6$,, $S_3P_1$=$S_6$,$S_4P_1$=$S_6$,$S_5P_1$=$S_6$}]; switch_to_switch=[$S_2P_2$={CP443(1),CP443(2),1214,HP},$S_3P_2$={CP1543, CP443(1),CP443(2),1214,HP},$S_6P_2$={CP1543,CP343(1),CP443(1),CP443 (2),1214,HP}];

(7) Take $S_1$={CP443(1),CP443(2),1214,HP,CP343(2)} out of switch_to_endpoint and search switch_to_switch for elements equivalent to {CP443(1),CP443(2),1214,HP,CP343(2)}. No element is found.

Thus, construct the subset of {CP443(1),CP443(2),1214,HP,CP343(2)} in a decreasing sequence of the sizes of subsets and search switch_to_switch for the corresponding subset. Finally, a unique element

$S_2P_2$={CP443(1),CP443(2),1214,HP} is found according to {CP443(1),CP443(2),1214,HP}, then connect the switch $S_1$ to the port $P_2$ on the switch $S_2$ in the network topology.

Thus, $S_2$={CP443(1),CP443(2),1214,HP,CP343(2)} can be expanded into switch_to_endpoint.

Delete $S_2P_2$={CP443(1),CP443(2),1214,HP} from switch_to_switch. At this time, switch_to_endpoint=[$S_2$={CP1543,CP443(1),CP443(2),1214,HP,CP343( 2) },$S_3$={CP343(1) },{$S_1P_1$=$S_6$,$S_2P_1$=$S_6$,,$S_3P_1$=$S_6$,$S_4P_1$=$S_6$,$S_5P_1$=$S_6$}]; switch_to_switch=[$S_3P_2$={CP1543,CP443(1),CP443(2),1214,HP},$S_6P_2$={ CP1543,CP343(1),CP443(1),CP443(2),121 4,HP}];

(8) Take $S_2$={CP1543,CP443(1),CP443(2),1214,HP,CP343(2)} out of switch_to_endpoint and search switch_to_switch for elements equivalent to {CP1543,CP443(1),CP443(2),1214,HP,CP343(2)}. No element is found.

Thus, construct the subset of {CP1543,CP443(1),CP443(2),1214,HP,CP343(2)} in a decreasing sequence of the sizes of subsets and search switch_to_switch for the corresponding subset. Finally, a unique element $S_3P_2$={CP1543,CP443(1),CP443(2),1214,HP} is found according to {CP1543,CP443(1),CP443(2),1214,HP}; then, connect the switch $S_2$ to the port $P_2$ on the switch $S_3$ in the network topology.

Thus, $S_3$={CP1543,CP443(1),CP443(2),1214,HP} can be expanded into switch_to_endpoint.

Delete $S_2P_2$={CP443(1),CP443(2),1214,HP} from switch_to_switch. At this time, switch_to_endpoint=[$S_3$={CP1543,CP443(1),CP443(2),1214,HP,CP343( 2),CP343(1) },{$S_1P_1$=$S_6$,$S_2P_1$=$S_6$,,$S_3P_1$=$S_6$, $S_4P_1$=$S_6$,$S_5P_1$=$S_6$}]; switch_to_switch=[$S_6P_2$={CP1543,CP343(1),CP443(1),CP443(2),1214, HP}];

(9) Take $S_3$={CP1543,CP443(1),CP443(2),1214,HP,CP343(1)} out of switch_to_endpoint and search switch_to_switch for elements equivalent to {CP1543,CP443(1),CP443(2),1214,HP,CP343(1)}. A unique element $S_6P_2$={CP1543,CP343(1),CP443(1),CP443(2),1214,HP} is matched. Then, connect the switch $S_3$ to the port $P_2$ on the switch $S_6$ in the network topology.

Thus, $S_6$={CP1543,CP343(1),CP443(1),CP443(2),1214,HP} can be expanded into switch_to_endpoint.

Delete $S_6P_2$={CP1543,CP343(1),CP443(1),CP443(2),1214,HP} from switch_to_switch.

So far, all switches have been connected to form a complete topology. The algorithm ends. The network topology obtained by the algorithm is completely consistent with the actual network topology.

Embodiment 6:

The network adopted in the present embodiment is the same as the one adopted in embodiment 5. Fig. 11 shows the network topology, wherein a circle represents a switch and a square represents a terminal device.

1. First initialize the network topology, as shown in Fig. 12.

2. Organize data in the MAC address tables of switch ports obtained through an SNMP detection to obtain list_of_mac_set shown in Table 4 in embodiment 5, and map it into symbols of corresponding devices (obtained through the SNMP detection).

3. Determine the connections of terminal devices.

Similar to embodiment 5, determine the connections of terminal devices according to the following rules:

1) The terminal device connected to a port on a switch can be determined according to whether the MAC address table of the port on the switch contains a plurality of MAC addresses corresponding to the same device.

2) It can be determined that a terminal device is not directly connected to a port on the first switch by determining whether the MAC address table of the port on the switch contains the MAC address of the terminal device (for example, S623) and MAC addresses of ports on other switches.

Accordingly, the network topology shown in Fig. 13 can be derived.

4. Remove all MAC addresses other than MAC addresses of switch ports from list_of_mac_set, including:

1) MAC addresses of terminal devices;

2) MAC address of the management port of switches;

3) other unrelated MAC addresses.

Then obtain the list_of_mac_set shown in Table 6.

Table 6

| Switch | Port | MACaddressset | |
|---|---|---|---|
| $S_1$ | $P_1$ | 00-1B-1B-916B-DE | S4P2 |
| | | 00-1B-1B-91-6C-01 | S2P2 |
| | $P_2$ | 00-1B-1B-91-6B-DD | S4P1 |
| | | 00-1B-1B-91-6B-FB | S5P1 |
| | $P_3$ | | |
| | $P_4$ | | |
| $S_2$ | $P_1$ | 00-1B-1B-91-6B-DE | S4P2 |
| | | 00-1B-1B-91-6B-ED | S3P2 |
| | $P_2$ | 00-1B-1B-91-6B-DD | S4P1 |
| | | 00-1B-1B-91-6B-E7 | S1P1 |
| | $P_3$ | | |
| | $P_4$ | | |
| $S_3$ | $P_1$ | 00-1B-1B-91-6B-DE | S4P2 |
| | | 00-1B-1B-91-6B-B3 | S6P2 |
| | $P_2$ | 00-1B-1B-91-6B-DD | S4P1 |
| | | 00-1B-1B-91-6C-00 | S2P1 |
| | $P_3$ | | |
| | $P_4$ | | |
| $S_4$ | $P_1$ | 00-1B-1B-91-6B-FC | S5P2 |
| | $P_2$ | | |
| | $P_3$ | | |
| | $P_4$ | | |

(continued)

| Switch | Port | MACaddressset | |
|--------|------|---------------|---|
| $S_5$ | $P_1$ | 00-1B-1B-91-6B-DE | S4P2 |
| | | 00-1B-1B-91-6B-E8 | S1P2 |
| | $P_2$ | 00-1B-1B-91-6B-DD | S4P1 |
| | $P_3$ | | |
| | $P_4$ | | |
| $S_6$ | $P_1$ | 00-1B-1B-91-6B-DE | S4P2 |
| | $P_2$ | 00-1D-1B-91-6B-DD | S4P1 |
| | | 00-1B-1B-91-6B-EC | S3P1 |
| | $P_3$ | | |
| | $P_4$ | | |

5. Derive the connection relationship between switches according to the MAC addresses in the MAC address table of each port on each switch.

According to the list_of_mac_set, it can be derived that the connection relationship between switches is as follows:

1) First analyze the MAC addresses of the ports on the switch $S_1$. It is found that the MAC address tables of the port $P_1$ and the port $P_2$ both contain the MAC address of the switch $S_4$. Usually, this situation will not appear. Thus, it can be determined that the switch $S_4$ is a management node (redundancy manager) of the ring network and the MAC addresses of the ports on the switch can be removed.

According to the remaining MAC addresses, it can directly be inferred that
the port $P_1$ on the switch $S_1$ is connected to the port $P_2$ on the switch $S_2$, and
the port $P_2$ on the switch $S_1$ is connected to the port $P_1$ on the switch $S_5$.

2) Similarly, remove the MAC addresses of the ports on the switch $S_4$ from the MAC address tables of ports on the switch $S_2$. According to the remaining MAC addresses, it can directly be inferred that:

the port $P_1$ on the switch $S_2$ is connected to the port $P_2$ on the switch $S_3$, and
the port $P_2$ on the switch $S_2$ is connected to the port $P_1$ on the switch $S_1$.

3) Similarly, remove the MAC addresses of the ports on the switch $S_4$ from the MAC address tables of ports on the switch $S_3$. According to the remaining MAC addresses, it can directly be inferred that

the port $P_1$ on the switch $S_3$ is connected to the port $P_2$ on the switch $S_6$, and
the port $P_2$ on the switch $S_3$ is connected to the port $P_1$ on the switch $S_2$.

4) For the MAC address tables of the ports on the switch $S_4$, which is a management switch, it can directly be inferred according to the MAC addresses on the ports that the port $P_1$ on the switch $S_4$ is connected to the port $P_2$ on the switch $S_5$.

5) Similarly, remove the MAC addresses of the ports on the switch $S_4$ from the MAC address tables of ports on the switch $S_5$. According to the remaining MAC addresses, it can directly be inferred that

the port $P_1$ on the switch $S_5$ is connected to the port $P_2$ on the switch $S_1$, and
in addition, it can be learned from step 4) that the port $P_2$ on the switch $S_5$ is connected to the port $P_1$ on the switch $S_4$.

6) Similarly, remove the MAC addresses of the ports on the switch $S_4$ from the MAC address tables of ports on the switch $S_6$. According to the remaining MAC addresses, it can directly be inferred that
the port $P_2$ on the switch $S_6$ is connected to the port $P_1$ on the switch $S_3$.

So far, all switches have been connected to form a complete topology. The algorithm ends. The network topology obtained by the algorithm is completely consistent with the actual network topology.

In addition, when the MAC address table of each port on each switch is acquired from a target network, the MAC address table of each port on each switch in the target network can be acquired from a switch at the convergence layer and/or core layer of the target network.

Switches in a network may be classified into access layer switches, convergence layer switches and core layer switches. Access layer switches are used to connect terminal devices, convergence layer switches are used to connect access layer switches or terminal devices, and core layer switches are used to connect convergence layer switches or terminal devices. Usually, the number of access layer switches is greater than the number of convergence layer switches, and the number of convergence layer switches is greater than the number of core layer switches.

When the MAC address table of a port on a switch is acquired from a switch at the access layer of a network, it is necessary to deploy a probe on each of the switches S1-S6, as shown in Fig. 13. Then, the deployed probes are utilized to acquire the MAC address table of each port on each switch at the access layer.

When the MAC address table of a port on a switch is acquired from a switch at the convergence layer of a network, it is necessary to deploy a probe on each of the switches S7-S9, as shown in Fig. 7. Then, the deployed probes are utilized to acquire the MAC address table of each port on each switch at the convergence layer and the access layer.

When the MAC address table of a port on a switch is acquired from a switch at the core layer of a network, it is necessary to deploy a probe only on the switch S10, as shown in Fig. 7. Then, the deployed probe is utilized to acquire the MAC address table of each port on each switch at the core layer, the convergence layer and the access layer.

From the above-mentioned comparative analysis, it can be learned that, if the MAC address table of each port on each switch is acquired from a switch at the convergence layer and/or the core layer, but not from a switch at the access layer, a probe needs to be deployed on a smaller number of switches so that the MAC address table of each port on each switch in a target network can be acquired. Thus, it is more convenient to acquire MAC address tables and meanwhile the cost of acquiring MAC address tables is also lowered.

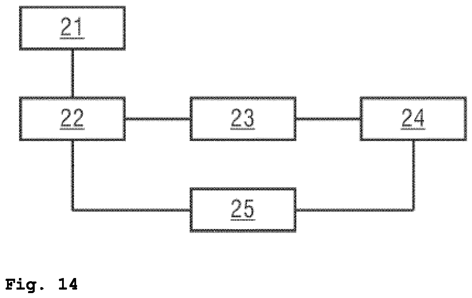

As shown in Fig. 14, the network topology construction apparatus provided by one embodiment of the present invention comprises:

a table acquisition module 21, used to acquire a MAC address table of each port on each switch in a target network, wherein
the target network comprises at least two switches and at least one terminal device;
a first relationship determination module 22, used to determine a first connection relationship in the target network according to the MAC addresses of terminal devices in the target network that are included in each MAC address table acquired by the table acquisition module 21, wherein the first connection relationship is used to represent a connection relationship between terminal devices and switches in a network;
a port screening module 23, used to determine at least one first port according to the first connection relationship determined by the first relationship determination module 22 in the target network, wherein the first port is a port connected with no terminal device on each switch in the target network;
a second relationship determination module 24, used to determine a second connection relationship in the target network according to the MAC addresses included in the MAC address table of each first port determined by the port screening module 23 in the target network, wherein the second connection relationship is used to represent a connection relationship between switches in a network;
a topology construction module 25, used to determine a network topology of the target network according to the first connection relationship determined by the first relationship determination module 22 and the second connection relationship determined by the second relationship determination module 24 in the target network.

In embodiments of the present invention, the table acquisition module 21 can be used to execute step 101 in the embodiment of the above-mentioned method, the first relationship determination module 22 can be used to execute step 102 in the embodiment of the above-mentioned method, the port screening module 23 can be used to execute step 103 in the embodiment of the above-mentioned method, the second relationship determination module 24 can be used to execute step 104 in the embodiment of the above-mentioned method, and the topology construction module 25 can be used to execute step 105 in the embodiment of the above-mentioned method.

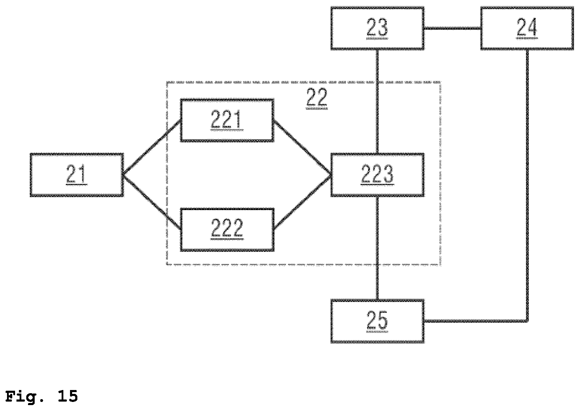

Alternatively, on the basis of the network topology construction apparatus shown in Fig. 14, as shown in Fig. 15, the first relationship determination module 22 comprises:

a first matching unit 221, used for each MAC address table acquired by the table acquisition module 21 to determine that the port which the MAC address table belongs to is connected to a first terminal device if the MAC address table contains only one MAC address of the first terminal device in the target network and no other acquired MAC address tables containing MAC addresses completely the same as the MAC addresses in the MAC address table exist;

a second matching unit 222, used for each MAC address table acquired by the table acquisition module 21 to determine that the port which the MAC address table belongs to is connected to a second terminal device in the target network if the MAC address table contains at least two MAC addresses of the second terminal device;

an integration unit 223, used to determine a first connection relationship in the target network according to the connection relationship determined by the first matching unit 221 and the second matching unit 222 between terminal devices and ports of the switches in the target network and the ports included in each switch in the target network.

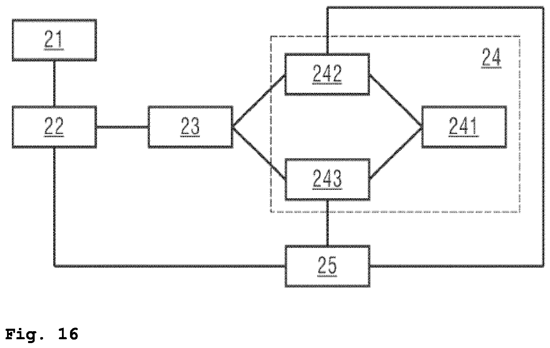

Alternatively, on the basis of the network topology construction apparatus shown in Fig. 14, as shown in Fig. 16, the second relationship determination module 24 comprises:

a determination unit 241, used to determine whether each port on each switch in the target network has a MAC address;

a first relationship determination unit 242, used to determine the second connection relationship in the target network according to the MAC addresses of the ports of the switches in the target network that are included in the MAC address table of each of the first ports in the target network if the determination unit 241 determines that each port on each switch in the target network has a MAC address;

a second relationship determination unit 243, used to determine the second connection relationship in the target network according to the MAC addresses of terminal devices included in the MAC address table of each of the first ports in the target network if the determination unit 241 determines that at least one port on each switch in the target network has no MAC address.

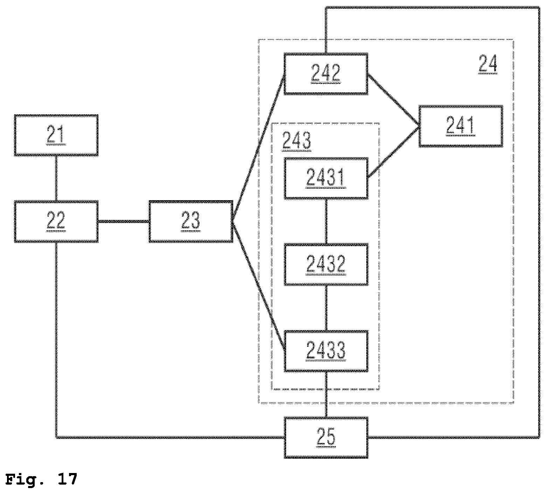

Alternatively, on the basis of the network topology construction apparatus shown in Fig. 16, as shown in Fig. 17, the second relationship determination unit 243 comprises:

an address deletion subunit 2431, used for any switch in the target network to determine that the switch is a redundancy manager in the target network and delete the MAC addresses of all ports on the switch from the MAC address table of each first port if the MAC addresses of at least two ports on the switch are in the MAC address table of the same port on another switch in the target network;

a first relationship determination subunit 2432, used for each of the first ports in the target network to determine that the first port is connected with a second port if the MAC address
table of the first port contains a MAC address of the second port in the target network, wherein the first port and the second port are located on different switches in the target network;

a first integration subunit 2433, used to determine the second connection relationship in the target network according to the connection relationship determined by the first relationship determination subunit 2432 between each of the first ports and the second port in the target network and the switches the first port and the second port belong to.

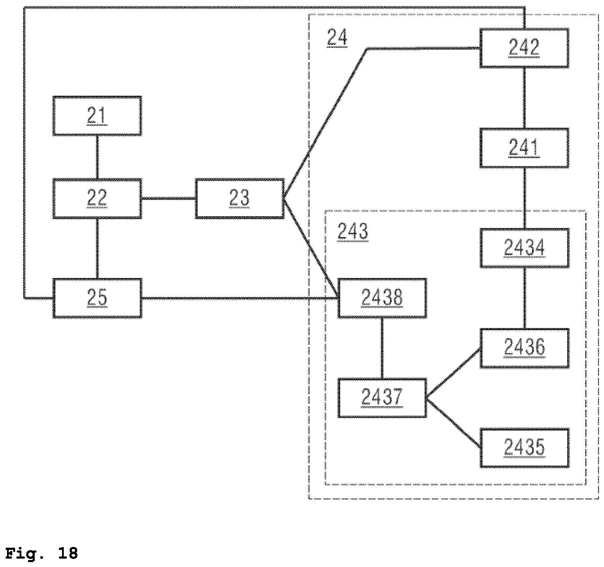

Alternatively, on the basis of the network topology construction apparatus shown in Fig. 16, as shown in Fig. 18, the second relationship determination unit 243 comprises:

a port screening subunit 2434, used for each of the first ports in the target network to screen a third port out of first ports other than the first port in the target network,
wherein the MAC address table of the third port and the MAC address table of the first port contain at least one identical MAC address;

a first set construction subunit 2435, used for each of the first ports in the target network to acquire a corresponding first MAC address set of the first port, wherein the elements in the first MAC address set are MAC addresses of terminal devices in the MAC address table of the first port;

a second set construction subunit 2436, used for each of the third ports screened out by the port screening subunit 2434 to acquire a corresponding second MAC address set of the third port, wherein the elements in the second MAC address set are MAC addresses of terminal devices in the MAC address table of the third port;

a second relationship determination subunit 2437, used to determine the connection relationship between the first port and the third port according to the inclusion relationship between the first MAC address set acquired by the first set construction subunit 2435 and each of the second MAC address sets acquired by the second set construction subunit 2436 and the inclusion relationship between the subsets of the first MAC address set acquired by the first set construction subunit 2435 and each of the second MAC address sets acquired by the second set construction subunit 2436;

a second integration subunit 2438, used to determine the second connection relationship in the target network according to the connection relationship determined by the second relationship determination subunit 2437 between each of the first ports and the third port in the target network and the switches the first port and the third port belong to.

Alternatively, on the basis of the network topology construction apparatus shown in any of Fig. 14 to 18, the table acquisition module 21 is used to acquire a MAC address table of each port on each switch in the target network from a switch at the convergence layer and/or core layer of the target network, wherein a switch located at the core layer of the target network is connected with a switch located at the convergence layer of the target network, a switch located at the convergence layer of the target network is connected with a switch located at the access layer of the target network, and a switch located at the access layer of the target network is connected with terminal devices.

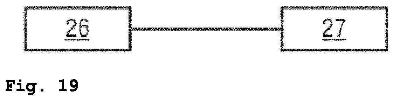

As shown in Fig. 19, a network topology construction apparatus provided by one embodiment of the present invention comprises at least one memory 26 and at least one processor 27, wherein

the at least one memory 26 is configured to store executable instructions, and
the at least one processor 27 is coupled with the at least one memory 26, and when executing the executable instructions, the at least one processor is configured to:

acquire a MAC address table of each port on each switch in a target network, wherein the target network comprises at least two switches and at least one terminal device;
determine a first connection relationship in the target network according to the MAC addresses of terminal devices in the target network that are included in each acquired MAC address table, wherein the first connection relationship is used to represent a connection relationship between terminal devices and switches in a network;
determine at least one first port according to the first connection relationship in the target network, wherein the first port is a port connected with no terminal device on each switch in the target network;
determine a second connection relationship in the target network according to the MAC addresses included in the MAC address table of each of the first ports in the target network, wherein the second connection relationship is used to represent a connection relationship between switches in a network;
determine a network topology of the target network according to the first connection relationship and the second connection relationship in the target network.

Alternatively, on the basis of the network topology construction apparatus shown in Fig. 19, after executing the executable instructions, the at least one processor 27 is further configured to:
for each acquired MAC address table, perform the following:

if the MAC address table contains only one MAC address of a first terminal device in the target network and no other acquired MAC address tables containing MAC addresses completely the same as the MAC addresses in the MAC address table exist, determine that the port which the MAC address table belongs to is connected with the first terminal device;
if the MAC address table contains at least two MAC addresses of a second terminal device in the target network, determine that the port which the MAC address table belongs to is connected with the second terminal device;
determine a first connection relationship in the target network according to the connection relationship between terminal devices and the ports of the switches in the target network and the ports included in each switch in the target network.

Alternatively, on the basis of the network topology construction apparatus shown in Fig. 19, after executing the executable instructions, the at least one processor 27 is further configured to:

determine whether each port on each switch in the target network has a MAC address;
if each port on each switch in the target network has a MAC address, determine the second connection relationship in the target network according to the MAC addresses of the ports of the switches that are included in the MAC address table of each of the first ports in the target network;
if at least one port on each switch in the target network has no MAC address, determine the second connection relationship in the target network according to the MAC addresses of terminal devices included in the MAC address table of each of the first ports in the target network.

Alternatively, on the basis of the network topology construction apparatus shown in Fig. 19, after executing the executable instructions, the at least one processor 27 is further configured to:

for any switch in the target network, if the MAC addresses of at least two ports on the switch are in the MAC address table of the same port on another switch in the target network,

determine that the switch is a redundancy manager in the target network and delete the MAC addresses of all ports on the switch from the MAC address table of each first port;

for each of the first ports in the target network, if the MAC address table of the first port contains a MAC address of a second port in the target network, determine that the first port is connected with the second port, wherein the first port and the second port are located on different switches in the target network;

determine the second connection relationship in the target network according to the connection relationship between each of the first ports and the second port in the target network and the switches the first port and the second port belong to.

Alternatively, on the basis of the network topology construction apparatus shown in Fig. 19, after executing the executable instructions, the at least one processor 27 is further configured to:

for each of first ports in the target network, perform the following:

screen a third port out of first ports other than the first port in the target network, wherein the MAC address table of the third port and the MAC address table of the first port contain at least one identical MAC address;

acquire a corresponding first MAC address set of the first port, wherein the elements in the first MAC address set are MAC addresses of terminal devices in the MAC address table of the first port;

for each of the third ports, acquire a corresponding second MAC address set of the third port, wherein the elements in the second MAC address set are MAC addresses of terminal devices in the MAC address table of the third port;

determine the connection relationship between the first port and the third port according to the inclusion relationship between the first MAC address set and each of the second MAC address sets and the inclusion relationship between the subsets of the first MAC address set and each second MAC address set;

determine the second connection relationship in the target network according to the connection relationship between each of the first ports and the third port in the target network and the switches the first port and the third port belong to.

Alternatively, on the basis of the network topology construction apparatus shown in Fig. 19, after executing the executable instructions, the at least one processor 27 is further configured to:

acquire a MAC address table of each port on each switch in the target network from a switch at the convergence layer and/or core layer of the target network, wherein a switch located at the core layer of the target network is connected with a switch located at the convergence layer of the target network, a switch located at the convergence layer of the target network is connected with a switch located at the access layer of the target network, and a switch located at the access layer of the target network is connected with terminal devices.

The present invention further provides a computer-readable medium, which stores instructions used to allow a machine to execute the network topology construction method described in this document. Specifically, a system or device equipped with a storage medium can be provided. Software program codes which can realize the function in any of the above-mentioned embodiments are stored in the storage medium and the computer (or CPU or MPU) of the system or device can read and execute the program codes stored in the storage medium.

In this case, program codes read from the storage medium themselves can realize the function in any of the above-mentioned embodiments. Therefore, program codes and the storage medium where program codes are stored constitute a part of the present invention.

Embodiments of the storage medium used to provide program codes include a floppy disk, hard disk, magneto-optical disk, compact disk (for example, compact disk read-only memory (CD-ROM), compact disk - recordable (CD-R), compact disk - rewritable (CD-RW), digital video disk - read only memory (DVD-ROM), digital versatile disk - random access memory (DVD-RAM), digital versatile disk - rewritable (DVD-RW), digital versatile disk plus rewritable (DVD+RW), magnetic tape, nonvolatile memory card, and read-only memory (ROM). Alternatively, the program codes may be downloaded from a server computer over a communication network.

In addition, it should be understood that the function of any of the above-mentioned embodiments can be realized not only by executing the program codes read out by a computer, but also by allowing the operating system running on the computer to complete a part or all of practical operations through program code based instructions.

In addition, it should be understood that the program codes read out of a storage medium are written into the memory in the expansion board in a computer or are written into a memory in an expansion module connected to the computer, and then the program code-based instructions allow the CPU installed on the expansion board or expansion module to execute a part or all of the practical operations to realize the function of any of the above-mentioned embodiments.

It should be noted that not all steps or modules in the above-mentioned flowcharts and system structure diagrams are required, and some steps or modules can be omitted, depending on the actual requirements. The execution sequence of the steps is not fixed and may be adjusted as required. The system structures described in the above-mentioned embodiments can be physical structures or logical structures. That is to say, some modules may be realized by a physical entity, or some modules may be realized by a plurality of physical entities or may jointly be realized by some components in a plurality of self-contained devices.

In the above-mentioned embodiments, hardware modules can mechanically or electrically be realized. For example, a hardware module can comprise a permanent dedicated circuit or logic (for example, special processor, FPGA, or ASIC) to complete the corresponding operations. A hardware module can further comprise a programmable logic or circuit (for example, a general processor or other programmable processor) and can complete the corresponding operations through temporary software setting. The specific implementation mode (mechanical mode, or dedicated permanent circuit, or circuit which is temporarily set) can be determined on the basis of consideration of cost and time.

The present invention is revealed and described in detail above in combination with the drawings and preferred embodiments. However, the present invention is not limited to the disclosed embodiments. On the basis of the plurality of above-mentioned embodiments, those skilled in the art can know that more embodiments of the present invention can be obtained by combining the code review means in the above-mentioned different embodiments, and all these embodiments should also fall within the scope of protection of the present invention.

**Claims**

1. A network topology construction method, **characterized in that** the method comprises:

   acquiring a MAC address table of each port on each switch in a target network, wherein the target network comprises at least two switches and at least one terminal device;
   determining a first connection relationship in the target network according to the MAC addresses of terminal devices in the target network included in each acquired MAC address table, wherein the first connection relationship is used to represent a connection relationship between terminal devices and switches included in a network;
   determining at least one first port according to the first connection relationship in the target network, wherein the first port is a port connected with no terminal device on each switch in the target network;
   determining a second connection relationship in the target network according to the MAC addresses included in the MAC address table of each of the first ports in the target network, wherein the second connection relationship is used to represent a connection relationship between switches in a network;
   determining a network topology of the target network according to the first connection relationship and the second connection relationship in the target network.

2. The method as claimed in claim 1, **characterized in that** determining a first connection relationship in the target network according to the MAC addresses of the terminal devices in the target network that are included in each acquired MAC address table comprises:
   for each acquired MAC address table, performing the following:

   if the MAC address table contains only one MAC address of a first terminal device in the target network and no other acquired MAC address tables containing MAC addresses completely the same as the MAC addresses included in the MAC address table exist, determining that the port which the MAC address table belongs to is connected with the first terminal device;
   if the MAC address table contains at least two MAC addresses of a second terminal device in the target network, determining that the port which the MAC address table belongs to is connected with the second terminal device;
   determining a first connection relationship in the target network according to the connection relationship between terminal devices and ports on the switches in the target network and the ports included in each switch in the target network.

3. The method as claimed in claim 1, **characterized in that** determining a second connection relationship in the target network according to the MAC addresses included in the MAC address table of each of the first ports in the target network comprises:

   determining whether each port on each switch in the target network has a MAC address;
   if each port on each switch in the target network has a MAC address, determining the second connection relationship in the target network according to the MAC addresses of the ports of the switches included in the MAC address table of each of the first ports in the target network;
   if at least one port on each switch in the target network has no MAC address, determining the second connection relationship in the target network according to the MAC addresses of terminal devices included in the MAC address table of each of the first ports in the target network.

4. The method as claimed in claim 3, **characterized in that** determining a second connection relationship in the target network according to the MAC addresses of the ports of the switches included in the MAC address table of each of the first ports in the target network comprises:

for any switch in the target network, if the MAC addresses of at least two ports on the switch are in the MAC address table of the same port on another switch in the target network, determining that the switch is a redundancy manager in the target network and deleting the MAC addresses of all ports on the switch from the MAC address table of each first port;

for each of the first ports in the target network, if the MAC address table of the first port contains a MAC address of a second port in the target network, determining that the first port is connected with the second port, wherein the first port and the second port are located on different switches in the target network;

determining the second connection relationship in the target network according to the connection relationship between each of the first ports and the second port in the target network and the switches the first port and the second port belong to.

5. The method as claimed in claim 3, **characterized in that** determining a second connection relationship in the target network according to the MAC addresses of terminal devices included in the MAC address table of each of the first ports in the target network comprises:

for each of the first ports in the target network, performing the following:

screening a third port out of first ports other than the first port in the target network, wherein the MAC address table of the third port and the MAC address table of the first port contain at least one identical MAC address;

acquiring a corresponding first MAC address set of the first port, wherein the elements in the first MAC address set are MAC addresses of terminal devices in the MAC address table of the first port;

for each of the third ports, acquiring a corresponding second MAC address set of the third port, wherein the elements in the second MAC address set are MAC addresses of terminal devices in the MAC address table of the third port;

determining the connection relationship between the first port and the third port according to the inclusion relationship between the first MAC address set and each of the second MAC address sets and the inclusion relationship between the subsets of the first MAC address set and each of the second MAC address sets;

determining the second connection relationship in the target network according to the connection relationship between each of the first ports and the third port in the target network and the switches the first port and the third port belong to.

6. The method as claimed in any of claims 1 to 5, **characterized in that** acquiring a MAC address table of each port on each switch in a target network comprises:

acquiring a MAC address table of each port on each switch in the target network from a switch at the convergence layer and/or core layer of the target network, wherein a switch located at the core layer of the target network is connected with a switch located at the convergence layer of the target network, a switch located at the convergence layer of the target network is connected with a switch located at the access layer of the target network, and a switch located at the access layer of the target network is connected with terminal devices.

7. A network topology construction apparatus, **characterized in that** the apparatus comprises:

a table acquisition module (21), used to acquire a MAC address table of each port on each switch in a target network, wherein the target network comprises at least two switches and at least one terminal device;

a first relationship determination module (22), used to determine a first connection relationship in the target network according to the MAC addresses of terminal devices in the target network that are included in each MAC address table acquired by the table acquisition module (21), wherein the first connection relationship is used to represent a connection relationship between terminal devices and switches in a network;

a port screening module (23), used to determine at least one first port according to the first connection relationship determined by the first relationship determination module (22) in the target network, wherein the first port is a port connected with no terminal device on each switch in the target network;

a second relationship determination module (24), used to determine a second connection relationship in the target network according to the MAC addresses included in the MAC address table of each of first ports determined by the port screening module (23) in the target network, wherein the second connection relationship is used to represent a connection relationship between switches in a network;
a topology construction module (25), used to determine a network topology of the target network according to the first connection relationship determined by the first relationship determination module (22) and the second connection relationship determined by the second relationship determination module (24) in the target network.

8. The apparatus as claimed in claim 7, **characterized in that** the first relationship determination module (22) comprises:

a first matching unit (221), used for each MAC address table acquired by the table acquisition module (21) to determine that the port which the MAC address table belongs to is connected with a first terminal device if the MAC address table contains only one MAC address of the first terminal device in the target network and no other acquired MAC address tables containing MAC addresses completely the same as the MAC addresses included in the MAC address table exist;
a second matching unit (222), used for each MAC address table acquired by the table acquisition module (21) to determine that the port which the MAC address table belongs to is connected with a second terminal device in the target network if the MAC address table contains at least two MAC addresses of the second terminal device;
an integration unit (223), used to determine a first connection relationship in the target network according to the connection relationship determined by the first matching unit (221) and the second matching unit (222) between terminal devices and ports of the switches in the target network and the ports included in each switch in the target network.

9. The apparatus as claimed in claim 7, **characterized in that** the second relationship determination module (24) comprises:

a determination unit (241), used to determine whether each port on each switch in the target network has a MAC address;
a first relationship determination unit (242), used to determine the second connection relationship in the target network according to the MAC addresses of the ports of the switches included in the MAC address table of each of the first ports in the target network if the determination unit (241) determines that each port of each switch in the target network has a MAC address;
a second relationship determination unit (243), used to determine the second connection relationship in the target network according to the MAC addresses of terminal devices included in the MAC address table of each of the first ports in the target network if the determination unit (241) determines that at least one port of each switch in the target network has no MAC address.

10. The apparatus as claimed in claim 9, **characterized in that** the second relationship determination unit (243) comprises:

an address deletion subunit (2431), used for any switch in the target network to determine that the switch is a redundancy manager in the target network and delete the MAC addresses of all ports on the switch from the MAC address table of each first port if the MAC addresses of at least two ports on the switch are in the MAC address table of the same port on another switch in the target network;
a first relationship determination subunit (2432), used for each of the first ports in the target network to determine that the first port is connected with a second port if the MAC address table of the first port contains a MAC address of the second port in the target network, wherein the first port and the second port are located on different switches in the target network;
a first integration subunit (2433), used to determine the second connection relationship in the target network according to the connection relationship determined by the first relationship determination subunit (2432) between each of the first ports and the second port in the target network and the switches the first port and the second port belong to.

11. The apparatus as claimed in claim 9, **characterized in that** the second relationship determination unit (243) comprises:

a port screening subunit (2434), used for each of the first ports in the target network to screen a third port out of first ports other than the first port in the target network, wherein the MAC address table of the third port and the MAC address table of the first port contain at least one identical MAC address;
a first set construction subunit (2435), used for each of first ports in the target network to acquire a corresponding first MAC address set of the first port, wherein the elements in the first MAC address set are MAC addresses of terminal devices in the MAC address table of the first port;

a second set construction subunit (2436), used for each of the third ports screened out by the port screening subunit (2434) to acquire a corresponding second MAC address set of the third port, wherein the elements in the second MAC address set are MAC addresses of terminal devices in the MAC address table of the third port;

a second relationship determination subunit (2437), used to determine the connection relationship between the first port and the third port according to the inclusion relationship between the first MAC address set acquired by the first set construction subunit (2435) and each of the second MAC address sets acquired by the second set construction subunit (2436) and the inclusion relationship between the subsets of the first MAC address set acquired by the first set construction subunit (2435) and each of the second MAC address sets acquired by the second set construction subunit (2436);

a second integration subunit (2438), used to determine the second connection relationship in the target network according to the connection relationship determined by the second relationship determination subunit (2437) between each of the first ports and the third port in the target network and the switches the first port and the third port belong to.

12. The apparatus as claimed in any of claims 7 to 11, **characterized in that**
the table acquisition module (21) is used to acquire a MAC address table of each port on each switch in the target network from a switch at the convergence layer and/or core layer of the target network, wherein a switch located at the core layer of the target network is connected with a switch located at the convergence layer of the target network, a switch located at the convergence layer of the target network is connected with a switch located at the access layer of the target network, and a switch located at the access layer of the target network is connected with terminal devices.

13. A network topology construction apparatus, **characterized in that** the apparatus comprises at least one memory (26) and at least one processor (27), wherein

the at least one memory (26) is used to store a machine-readable program, and
the at least one processor (27) is used to invoke the machine-readable program to execute the method as claimed in any of claims 1 to 6.

14. A computer-readable medium, **characterized in that** computer instructions are stored in the computer-readable medium and a processor executes the method as claimed in any of claims 1 to 6 when the computer instructions are executed by the processor.

```
┌─────────────────────────────────┐
│             101                 │
└─────────────────────────────────┘
                 │
                 ▼
┌─────────────────────────────────┐
│             102                 │
└─────────────────────────────────┘
                 │
                 ▼
┌─────────────────────────────────┐
│             103                 │
└─────────────────────────────────┘
                 │
                 ▼
┌─────────────────────────────────┐
│             104                 │
└─────────────────────────────────┘
                 │
                 ▼
┌─────────────────────────────────┐
│             105                 │
└─────────────────────────────────┘
```

Fig. 1

Fig. 2

Fig. 3

Fig. 4

Fig. 5

Fig. 6

Fig. 7

$S_7$  $S_8$  $S_9$  $S_{10}$

$S_1$  $S_2$  $S_3$  $S_4$  $S_5$  $S_6$

Fig. 8

Fig. 9

Fig. 10

Fig. 11

$S_6$  $S_3$  $S_2$  $S_1$  $S_5$  $S_4$

Fig. 12

Fig. 13

Fig. 14

Fig. 15

Fig. 16

Fig. 17

Fig. 18

Fig. 19

## INTERNATIONAL SEARCH REPORT

| International application No. |
| --- |
| **PCT/CN2020/093785** |

**A. CLASSIFICATION OF SUBJECT MATTER**

H04L 12/24(2006.01)i; H04L 12/721(2013.01)i; H04L 12/42(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 网络拓扑, 构建, 发现, 管理, 交换机, 终端, 地址表, 连接关系, network topology, discovery, switch, endpoint, address forwarding table, AFT

**C. DOCUMENTS CONSIDERED TO BE RELEVANT**

| Category* | Citation of document, with indication, where appropriate, of the relevant passages | Relevant to claim No. |
| --- | --- | --- |
| X | CN 107294797 A (GUANGDONG POWER GRID CORPORATION ELECTRIC POWER RESEARCH INSTITUTE et al.) 24 October 2017 (2017-10-24) description, paragraphs [0004]-[0057] | 1, 7, 13, 14 |
| Y | CN 110855464 A (STATE GRID TIANJIN ELECTRIC POWER COMPANY et al.) 28 February 2020 (2020-02-28) description, paragraphs [0004]-[0073] | 1, 7, 13, 14 |
| Y | CN 109150640 A (THE 28TH RESEARCH INSTITUTE OF CHINA ELECTRONICS TECHNOLOGY GROUP CORPORATION) 04 January 2019 (2019-01-04) description, paragraphs [0004]-[0091] | 1, 7, 13, 14 |
| Y | CN 102143007 A (CHINA SOUTHERN POWER GRID CO., LTD. et al.) 03 August 2011 (2011-08-03) description paragraphs [0007]-[0078] | 1, 7, 13, 14 |
| A | CN 109936480 A (PENG CHENG LABORATORY) 25 June 2019 (2019-06-25) entire document | 1-14 |
| A | US 2015319045 A1 (HEWLETT PACKARD DEVELOPMENT CO.) 05 November 2015 (2015-11-05) entire document | 1-14 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 January 2020** | **20 February 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/093785**

| Patent document cited in search report | | | Publication date (day/month/year) | Patent family member(s) | | | Publication date (day/month/year) |
|---|---|---|---|---|---|---|---|
| CN | 107294797 | A | 24 October 2017 | CN | 107294797 | B | 09 June 2020 |
| CN | 110855464 | A | 28 February 2020 | None | | | |
| CN | 109150640 | A | 04 January 2019 | None | | | |
| CN | 102143007 | A | 03 August 2011 | None | | | |
| CN | 109936480 | A | 25 June 2019 | CN | 109936480 | B | 15 September 2020 |
| US | 2015319045 | A1 | 05 November 2015 | GB | 2361156 | A | 10 October 2001 |
| | | | | US | 9112768 | B1 | 18 August 2015 |
| | | | | GB | 2361156 | B | 07 August 2002 |

Form PCT/ISA/210 (patent family annex) (January 2015)